# EUROPEAN PATENT APPLICATION

(11) **EP 2 322 308 A1**
(43) Date of publication of application: **18.05.2011**
(21) Application number: 08791114.5
(22) Date of filing: 11.07.2008
(51) Int. Cl.: B23K 11/06, B21D 1/02, B23K 11/36, B23K 31/00, B23K 37/08

(54) **MASH SEAM WELDING METHOD AND EQUIPMENT**

(71) Applicant: Mitsubishi-Hitachi Metals Machinery, Inc., Tokyo 108-0014 (JP)
(72) Inventor: KAGA, Shinichi, Tokyo 108-0014 (JP); TOMINAGA, Noriaki, Hiroshima-shi Hiroshima 733-8553 (JP); SAITO, Takehiko, Hiroshima-shi Hiroshima 733-8553 (JP); ONOSE, Mitsuru, Tokyo 108-0014 (JP); YOSHIMURA, Yasutsugu, Tokyo, 108-0014 (JP); TAGATA, Hirotoshi, Hiroshima-shi Hiroshima 733-8553 (JP); WATANABE, Yujiro, Hiroshima-shi Hiroshima 733-8553 (JP); ZENITANI, Satoru, Hiroshima-shi Hiroshima 733-8553 (JP); WAKAMOTO, Ikuo, Hiroshima-shi Hiroshima 733-8553 (JP)
(74) Representative: Beetz & Partner
(86) International application number: PCT/JP2008/062633
(87) International publication number: WO 2010/004656

(57) **Abstract**

A pair of upper and lower electrode wheels (1, 2) are disposed so that their axes (17, 18) are tilted in a horizontal plane in respective directions opposite to each other with respect to a straight line (Y) perpendicular to a welding line (X) defined on overlapping portions (L) of two metal plates (5, 6), and mash seam welding is performed while positively driving electric motors (61, 62). This can reduce the increased amount of thickness and step gradient of a joint portion to reduce a stress concentration factor to ensure a high degree of joint strength. The metal plates are joined to each other such that a nugget (N) is not deviated from a joint interface. The respective tilting directions of the axes (17, 18) of the electrode wheels (1, 2) are made to face in the horizontal plane toward the extending direction of a metal plate with which the electrode wheels (1, 2) first come into contact. Therefore, it is possible to prevent respective ends of the metal plates at the overlapping portions L from biting into and scratching the corresponding electrode wheels (1, 2) and to prevent the occurrence of spattering during the welding.

## Description

### Technical Field

The present invention relates to a mash seam welding method and apparatus in which two metal plates are placed to overlap each other at their end portions, and the overlapping portions are pressed by a pair of upper and lower electrode wheels and continuously welded together by applying a welding current to the overlapping portions, followed by joining the metal plates.

### Background Art

A mash seam welder employs a welding method as below. Two metal plates are placed to overlap each other at their end portions. The overlapping portions are pressed by a pair of electrode wheels and continuously welded together by applying a welding current thereto. At the same time, the joint portion softened by being heated to high temperature is rolled by the electrode wheels to reduce the thickness of the joint portion. However, this welding method cannot roll the joint portion to a level corresponding to the base material thickness. There is a problem in that the thickness of the joint portion is increased to approximately 120% to 160% of the thickness of the base material (the metal plate), which forms a step between the joint portion and the base material.

The following method is proposed as a method of reducing the thickness of the joint portion. A pair of pressure rollers is installed adjacently to and on one side of a pair of upper and lower electrode wheels. Before mash seam welding, the overlapping portions of the metal plates are rolled by the pressure rollers by moving a base frame supporting the electrode wheels and the pressure rollers in a pressure roller preceding direction. After the completion of the rolling, the metal plates overlapping each other are made slightly away from each other to reduce the thickness of the joint portion. Thereafter, the overlapping portion is pressed by the electrode wheels by moving the base frame in the opposite direction and is continuously subjected to mash seam welding by applying welding current thereto. Further, the joint portion is rolled by the pressure rollers to reduce its thickness. See Patent Documents 1 and 2.

In order to reduce the thickness of a joint portion subjected to mash seam welding and to reduce tack time, a method and apparatus are proposed as below. First and second pairs of upper and lower pressure rollers are installed adjacently to and on both sides of a pair of upper and lower electrode wheels. Overlapping portions of metal plates are rolled by the first pressure rollers by moving a base frame supporting the electrode wheels and the pressure rollers in one first roller preceding direction. Thereafter, the rolled portion is pressed by the pair of electrode wheels following the pressure rollers and is continuously subjected to mash seam welding by applying welding current thereto. Further, the joint portion is rolled by the second pressure rollers following the electrode wheels to reduce its thickness. See Patent Document 1 and Patent Document 2.

If two metal plates made to overlap each other are joined to each other by a mash seam welding method, a molten-solidified portion called a nugget is formed at a thickness-wise central portion of the metal plates gripped by the pair of electrode wheels. The greater a difference in thickness between metal plates is, the more a joint interface is away from the thickness-wise central portion of the metal plates made to overlap each other. Therefore, since there is a problem in that the joint interface deviates from the nugget and joint strength decreases, it is necessary to limit a thickness ratio between metal plates to be joined to each other.

In order to alleviate restriction on a thickness ratio between metal plates to be joined to each other, the following means is proposed. A contact area between each of electrode wheels and material is set to roughly equalize the respective thicknesses of the metal plates after mash seam welding, so that a nugget is formed at a joint interface to increase an allowable joint thickness ratio. See Patent Document 3.
Patent Document 1: JP-2-15314-B
Patent Document 2: JP-2-16191-B
Patent Document 3: JP 3,350,933

### Disclosure of the Invention

### Problem to be Solved by the Invention

The mash seam welder employs the welding method as below. The two metal plates are made to overlap each other. The overlapping portions are pressed by the pair of electrode wheels and continuously welded together by applying a welding current thereto. At the same time, the joint portion heated to high temperature to be softened is rolled by the electrode wheels to reduce the thickness thereof. Therefore, the electrode wheels perform, through their rolling, most of plastic working used for reducing the thickness of joint materials. The plastic flow of the joint portion reduced in thickness prevails in the rolling direction of the electrode wheels. However, the joint portion has a relationship of a continuous body with the base material of the metal plate adjacent thereto. Therefore, the plastic flow in the rolling direction is restrained by the base material. Consequently, the joint portion cannot be rolled to the thickness of the base material. The thickness of the joint portion based on the mash seam welding method is increased to approximately 120% to 160% of the thickness of the base material (the metal plate). Since the joint portion and the base material are different in thickness from each other, a step having a high stress concentration factor is formed at the joint portion. If stress is applied to the joint portion, then the joint portion disadvantageously will have a significantly reduced strength. In other words, there is a problem in that this limits the application range of mash seam welding. In addition, there are problems in that a steep step scratches a work roll on a steel plate process line and productivity and yield are lowered.

For example, the joint portion of the mash seam welder is stepwise increased in thickness to approximately 120% to 160% of a base material. If the mash seam welder is applied to a cold rolling equipment having large total rolling reduction as it is, therefore, the step portion of the joint portion is interfolded into the base material in a cracked manner. Consequently, an effective cross-sectional area is reduced at the joint portion, called strip, of the metal plate. This increases a tensile stress with respect to the tensile force applied during cold rolling. In addition, the leading end of the step interfolded in a cracked manner becomes a singular stress field, which drastically increases fracture probability. This poses a problem as below. Since an inexpensive small-sized mash seam welder cannot be applied to cold rolling equipments having large total rolling reduction, the cold rolling equipments have to use a flash butt welder or a laser beam welder, which is expensive and large-sized.

A mash seam welder that can inexpensively join together steel plates having different thicknesses and material strengths is applied to tailored blanks. However, the mash seam welder cannot be applied to the joining of a portion where a joint portion increased in thickness leads to a problem with forming performance and of a portion where a problem of stress concentration resulting from the step defined at the joint portion occurs. Therefore, an expensive laser beam welder has to be applied to the tailored blanks.

An inexpensive mash seam welder is applied as a joining machine for making production processes continuous, to production lines such as a continuous annealing line, a galvanizing line and the like in steel production for the purpose of an improvement in yield and in productivity. However, as described above, the mash seam welding increases the thickness of the joint portion to form the steep step. When the joint portion passes through a skin pass rolling mill, therefore, the following operating method is employed in order to prevent a work roll from being scratched and to prevent the step defined at the joint portion from being mark-transferred onto the work roll. A line speed is lowered before and after the skin pass rolling mill and the work roll of the rolling mill is opened or a rolling force is lowered. This poses a problem of lowering productivity and yield.

Of the conventional methods described in Patent Document 1 and Patent Document 2, the former method can reduce the thickness of the joint portion to approximately 110% of the thickness of the base material. In the former method, after the completion of the rolling, the metal plates made to overlap each other are made slightly away from each other to reduce the thickness of the joint portion. Thereafter, the joint portion is subjected to mash seam welding and further is rolled by the pressure rollers. However, if the distance between the ends of the metal plates made away from each other is too large, a dent is formed near the joint portion due to the rolling of the pressure rollers before the welding. If the distance is not enough, the increased amount of thickness of the joint portion is increased. Because of this, an optimum range of a set amount of distance exists only at a pinpoint. That is to say, robustness is poor. Therefore, it is difficult to stably ensure joint strength with high quality.

Of the conventional methods described in Patent Document 1 and Patent Document 2, the method in which pressure rollers are installed on both sides of the electrode wheels and rolling before welding, welding and rolling after welding are continuously performed by moving the base frame in one direction has a problem in that the thickness of the joint portion cannot sufficiently be reduced. Specifically, the metal plates are gripped by the clamp devices so that an overlapping amount during the mash seam welding may not be deviated, and is restrained in the direction perpendicular to the welding direction by the clamp devices. Therefore, the rolling by the pressure rollers after the welding has a limitation on an amount of plastic flow in the direction perpendicular to the welding line and mainly allows metal to plastically flow in the roller-traveling direction. Similarly to the rolling by the electrode wheels during the mash seam welding described above, the plastic flow of the rolled portion by the pressure rollers are restrained by the base material so that extension is significantly limited. Therefore, the joint portion cannot be reduced in thickness to the thickness of the base material. In the rolling by the pressure rollers, the volume of the joint portion whose thickness has been reduced by the rolling is absorbed by being made to plastically flow in the longitudinal direction of the joint portion to increase the length of the joint portion. This causes an extension difference between the base material and the joint portion elongated by the pressure rollers, which poses a problem in that the joint portion is bent or deformed in a wavelike fashion.

Because of these situations, it has been said that it is difficult for the conventional mash seam welding method to perform the joining along while suppressing an increase in the thickness of the joint portion so as not to form the step between the joint portion and the base material. Therefore, a mash seam welding method has been desired that stably reduce the increased amount of thickness and step gradient of a joint portion and provides a high degree of joint strength.

On the other hand, in the mash seam welding, a nugget is formed at the thickness-wise central portion of two metal plates pressed by a pair of electrode wheels.
If the two metal plates have a large different thickness, there is a problem in that a portion where a nugget is formed deviates from a joint interface, which lowers the joint strength. In fact, a thickness ratio between two metal plates to be joined is limited to approximately 1 : 1.5 or lower and the mash seam welding is not applied to the thickness ratio higher than such a thickness ratio.

The following method has been proposed as a method of solving such a problem. As disclosed in Patent Document 3, a pair of electrode wheels are installed rotatably around corresponding axes parallel to each other, and in such electrode wheels, a contact area on the side of a thick metal plate is made smaller than that of the electrode wheel on the side of a thin metal plate. This roughly equalizes the thicknesses of the metal plates after mash seam welding. However, to quantitatively control a difference in thickness between the two metal plates, the overlapping portions of the metal plates have to be disposed at the ends of the electrode wheels. For example, if a metal plate with a thickness of 2 mm is joined to a metal plate with a thickness of 3 mm, the overlapping amount of the metal plates generally corresponds to the thickness of the metal plate. Therefore, the contact width between the electrode wheel and the material is approximately 2 to 3 mm. If the joint portion is disposed at a barrel end of the electrode wheel and surface pressure between the electrode wheel and the material is maintained at a required accuracy, there is a problem as below. A clearance between vertically operating electrode wheel frames, a clearance between electrode wheel bearings, and a wear volume of the electrode wheel have to be controlled at a level of as high as approximately 0.2 to 0.3 mm. In this way, positioning accuracy in the joint-width direction has to be increased. Additionally, there is a problem in that also clamp devices which determine the position of the metal plate require a high degree of rigidity and accuracy, resulting in the installation being increased in size and in cost. Further, there is still a problem as below. Even if the nugget can be formed at the central portion of the joint interface, the thickness of the joint portion cannot be made as thick as that of the base material. Therefore, there is a limitation on application of this mash seam welding to a portion for which fatigue strength is required.

A first object of the present invention is to provide a mash seam welding method and apparatus which allow a reduction in the step gradient of a joint portion of two metal plates and can ensure a high degree of joint strength.

A second object of the present invention to provide a mash seam welding method and apparatus that can form a nugget formed by mash seam welding, at a joint interface to improve joint strength and can increase an allowable joint difference-thickness ratio with a relatively simple and inexpensive configuration in the case where metal plates having different thicknesses are joined to each other.

### Means for Solving the Problem

### <First Invention>

A first invention to solve the above-mentioned problems is characterized in that in a mash seam welding method in which two metal plates are placed to overlap each other at their end portions, and the overlapping portions are pressed by a pair of upper and lower electrode wheels and continuously welded together by applying a welding current to the overlapping portions, followed by joining the metal plates, respective axes of the electrode wheels are tilted in a horizontal plane in respective directions opposite to each other with respect to a straight line perpendicular to a welding line defined on the overlapping portions of the two metal plates, and then the electrode wheels are positively driven to thereby join the two metal plates.

As described above, the axes of the electrode wheels are tilted and the two metal plates are joined to each other while the electrode wheels are positively driven. A shearing force in a direction perpendicular to the welding line is applied to the overlapping portions of the metal plates. This applies the shear deformation in the same direction to the overlapping portions. Plastic flow in the direction perpendicular to the welding line occurs in addition to the plastic flow in the direction of the welding line provided by rolling of the conventional electric wheels. The plastic flow in the direction perpendicular to the welding line significantly reduces the increased amount of thickness of the overlapping portions (the joint portion) after the joining. Consequently, immediately thereafter, the joint portion is rolled by the pressure rollers to further reduce the increased amount of thickness of the joint portion, thereby significantly reducing the step gradient. Because of the reduced step gradient, the stress concentration factor can be reduced and a high degree of joint strength can be ensured.

If the two metal plates have different thicknesses, the tilt angles of the axes of the electrode wheels are adjusted according to the thicknesses of the metal plates. The reduced amount of thickness of each metal plate at the overlapping portions is adjusted. The metal plates are joined to each other so that the nugget is not deviated from the joint interface. In this way, the stress concentration factor is reduced due to the reduced step gradient, and in addition thereto, the nugget is formed at the joint interface, and this can drastically improve the joint strength of the joint portion and can increase an allowable joint difference-thickness amount to increase the flexibility of operation. Additionally, because of only the configuration in which the pair of electrode wheels is tilted and positively driven, the mash seam welding method can be realized with a relatively simple and inexpensive configuration.

### <Second Invention>

A second invention to solve the above-mentioned problems is characterized in that in the mash seam welding method according to the first invention, the respective axes of the electrode wheels are each tilted with respect to the straight line perpendicular to the welding line so that respective travel-directional portions of the electrode wheels face in the horizontal plane toward an extending direction of the metal plate with which the electrode wheels first come into contact, for joining the two metal plates.

With this, it is possible to prevent the ends of the metal plates at the overlapping portions from biting into and scratching the electrode wheels when the electrode wheels travel on the overlapping portions along with the progress of the welding. Consequently, it is possible to prevent spattering attributable to such scratches from occurring during the welding.

### <Third Invention>

A third embodiment to solve the above-mentioned problems is characterized in that in the mash seam welding method according to the first or second invention, the two metal plates have different thicknesses, and a tilt angle of the axis of the electrode wheel on a side where a metal plate has a larger thickness is made greater than that of the axis of the electrode wheel on the side where a metal plate has a smaller thickness.

As described above, the tilt angle of the axis of the electrode wheel on the side where the metal plate has a larger thickness is made greater. This increases the reduced amount of thickness of the metal plate on the larger thickness side and makes it roughly equal to the reduced amount of thickness of the metal plate having a smaller thickness. In this way, the metal plates are joined to each other so that the nugget is formed at the joint interface, which can improve joint strength.

### <Fourth Invention>

A fourth invention to solve the above-mentioned problems is characterized in that in the mash seam welding method according to any one of the first to the third invention, at least one of processes before the start of the welding of the overlapping portions and after the completion of the welding of the overlapping portions selects a first setting in which the pair of electrode wheels are brought into contact with each other or a second setting in which the pair of electrode wheels are not brought into contact with each other or are brought into contact with each other at a light load compared with the pressing force during the welding, and in the first setting the pair of electrode wheels is made non-driven and in the second setting the pair of electrode wheels is made driven.

This can prevent an excessive thrust force from being applied to the upper and lower electrode wheels, thereby elongating the operating lives of the bearings for the electrode wheels. Further, the wear of the upper and lower electrode wheels is suppressed, leading to a reduction in running cost.

### <Fifth Invention>

A fifth invention to solve the above-mentioned problems is characterized in that in the mash seam welding method according to any one of the first to the fourth invention, after the two metal plates have been joined to each other by the mash seam welding, respective axes of a pair of pressure rollers are tilted in a horizontal plane with respect the straight line perpendicular to the welding line, and a step defined at the joined portion is rolled in a traveling direction of the pressure rollers by positively driving the pressure rollers.

As described above, the respective axes of the pair of upper and lower pressure rollers are tilted and the joint portion is rolled while the pair of pressure rollers are positively driven. Therefore, similarly to the case where the respective axes of the pair of upper and lower electrode wheels are tilted, a shearing force in a direction perpendicular to the welding line is applied to the joint portion. This applies the shear deformation to the joint portion. Shear flow in the direction perpendicular to the welding line significantly reduces the increased amount of thickness of the joint portions. Consequently, during both the mash seam welding by the electrode wheels and the rolling by the pressure rollers, the increased amount of thickness is reduced by the shear deformation in the direction perpendicular to the welding line. In the joining of the metal plates having the same thickness, the joint portion can surely be rolled to a thickness corresponding to the base material thickness of the metal plate and thereby the step is smoothed. In the joint portion of the metal plates having different thicknesses, the step can be smoothed and the step gradient can significantly be reduced. Consequently, the stress concentration factor can more reliably be reduced to ensure a high degree of joint strength compared with the case where only the axes of the electrode wheels are tilted.

### <Sixth Invention>

A sixth invention to solve the above-mentioned problems is characterized in that in the mash seam welding method according to the fifth invention, the respective axes of the pressure rollers are each tilted with respect to the straight line perpendicular to the welding line so that respective travel-directional portions of the pressure rollers face in a horizontal plane toward a direction opposite to an extending direction of the metal plate concerning a metal material with which the pressure rollers first come into contact, and the step defined at the joint portion is rolled in the traveling direction.

This can prevent the step portion from being interfolded into the base material of the metal plate. Therefore, it is possible to prevent a crack-like defect (non-welded defect) formed when the step portion is interfolded into the base material. Thus, the quality of the joint portion is enhanced.

### <Seventh Invention>

A seventh invention to solve the above-mentioned problems is characterized in that in a mash seam welding apparatus in which two metal plates are placed to overlap each other at their end portions, and the overlapping portions are pressed by a pair of upper and lower electrode wheels and continuously welded together by applying a welding current to the overlapping portions, followed by joining the metal plates, the electrode wheels are installed in such a manner that axes of the electrode wheels are tilted in a horizontal plane in respective directions opposite to each other with respect to an axis perpendicular to a welding line defined on the overlapping portions of the two metal plates.

With this, in the mash seam welding method according to the first invention, a manufacturing facility can be provided that can achieve the following. The step gradient of the joint portion of the two metal plates can be reduced. Therefore, the stress concentration factor can be reduced and a high degree of joint strength can be ensured. In addition, if the two metal plates have different thicknesses, with a relatively simple and inexpensive configuration a nugget formed by the mash seam welding is formed at the joint interface to increase the joint strength, thereby increasing an allowable joint difference-thickness amount.

### <Eighth Invention>

An eighth invention to solve the above-mentioned problems is characterized by, in the mash seam welding apparatus according to the seventh invention, including a mechanism for independently tilting in a horizontal plane each of the respective axes of the electrode wheels with respect to the axis perpendicular to the welding line.

With this, the mash seam welding apparatus can be provided that can easily set properly an optimum tilt angle according to the thickness of each of the metal plates and covers a wide difference-thickness range of the thicknesses of the metal plates.

### <Ninth Invention>

A ninth invention to solve the above-mentioned problems is characterized by, in the mash seam welding apparatus according to the seventh or eighth invention, including a pair of upper and lower pressure rollers for rolling a joint portion of the metal plates joined by the mash seam welding; wherein the pressure rollers are installed in such a manner that axes of the pressure rollers are tilted in a horizontal plane with respect to the axis perpendicular to the welding line of the joint portion.

With this, in the mash seam welding method according to the fifth invention, a manufacturing facility can be provided that can achieve the following. During both the mash seam welding by the electrode wheels and the rolling by the pressure rollers, the increased amount of thickness of the joint portion is reduced by the shear deformation in the direction perpendicular to the welding line. In the joint portion of the metal plates, the step can be smoothed and the step gradient can significantly be reduced.
Consequently, the stress concentration factor can more reliably be reduced and a high degree of joint strength can be ensured.

### <Tenth Invention>

A tenth invention to solve the above-mentioned problems is characterized by, in the mash seam welding apparatus according to the ninth invention, including a mechanism for independently tilting in a horizontal plane the respective axes of the pressure rollers with respect to the straight line perpendicular to the welding line.

With this, a joining apparatus can be provided that can easily set properly an optimum tilt angle and covers a wide difference-thickness range of the thicknesses of the metal plates.

### Effect of the Invention

According to the present invention, when the metal plates are joined to each other by the mash seam welding method, the respective axes of the pair of upper and lower electrode wheels are tilted and the two metal plates are joined to each other while the electrode wheels are positively driven. Therefore, the increased amount of thickness of the joint portion can significantly be reduced by the shear deformation in the direction perpendicular to the welding line and the step gradient can significantly be reduced. Consequently, the stress concentration factor can be reduced and a high degree of joint strength can be ensured.

According to the present invention, if the two metal plates have different thicknesses, the tilt angles of the axes of the electrode wheels are adjusted according to the thicknesses of the metal plates. Therefore, the nugget can be formed at the joint interface, which improves the joint strength and increases the allowable joint difference-thickness amount to improve the flexibility of operation. Additionally, the above can be achieved with a relatively simple and inexpensive configuration in which only the pair of electrode wheels are tilted and positively driven.

According to the present invention, the step gradient of the joint portion of the metal plates is reduced and the step defined at the joint portion is smoothed. Therefore, the stress concentration factor of the joint portion can be reduced and a high degree of joint strength can be ensured. This produces the following effects as described below: the application range of the mash seam welding is enlarged; the work roll on a steel plate work line can be prevented from being scratched; and productivity and yield are increased.

More specifically, the present invention can reduce the step gradient of the joint portion subjected to the mash seam welding and smooth the step defined at the joint portion, which can reduce the stress concentration factor and a high degree of joint strength can be ensured. Therefore, in a cold rolling process for the steel product plant, a work roll can be prevented from being scratched during the cold rolling as the next process and anti-tension performance can be improved. Thus, the mash seam welding can be applied to the cold rolling process to which it has not heretofore been applied.

Also in tailored blanks, it has been avoided to apply the mash seam welding to a portion that requires fatigue strength due to stress concentration on the step defined at the joint portion. However, the step gradient is reduced and the steps are smoothed, which alleviates stress concentration to improve press formability. Thus, an expensive laser beam welder can be replaced with the inexpensive mash seam welder.

In a production line such as a continuous annealing line, galvanizing line or the like, the contact angle (stress concentration factor) between the work rolls of a skin pass rolling mill and the joint portion can be reduced. Consequently, the contact surface pressure between the work roll and the material can be reduced. It is possible, therefore, to prevent the scratching of the work roll and the mark transfer of the joint portion without lowering a line speed. Thus, productivity and yield can be improved.

Further, according to the present invention, the respective axes of the electrode wheels are tilted in the directions opposite to each other in the horizontal plain. Therefore, during the joint by the electrode wheels, the shearing force applied to the joint portion cancels the force transmitted to the clamp devices. This can prevent the buckling of the metal plate portion between the clamp device and the joint portion during the joint of the metal plates having a smaller thickness. Consequently, a relatively wide space can be ensured between the clamp device and the joint portion, which can alleviate restriction on the arrangement of the electrode wheels, pressure rollers and their related installations.

### Brief Description of the Drawings

Fig. 1 is a schematic view of a mash seam welding apparatus according to an embodiment of the present invention.
Fig. 2 illustrates a welding start state where two metal plates having the same thickness are placed to overlap each other and the overlapping portion is pressed by a pair of upper and lower electrode wheels.
Fig. 3 illustrates the shape of a joint portion having steps formed immediately after two metal plates having the same thickness have been joined to each other by mash seam welding by use of conventional electrode wheels whose axes are not tilted.
Fig. 4 illustrates the shape of a joint portion having steps formed immediately after two metal plates have been joined to each other by mash seam welding by use of two electrode wheels according to the present embodiment.
Fig. 5 illustrates metal flow in a contact arc length in the case where overlapping portions are joined to each other with the respective axes of the electrode wheels tilted, in the case of taking an upper electrode wheel 1 as an example.
Fig. 6 illustrates a cross-section of the joint portion and the electrode wheels during welding, as viewed from the rearward of the electrode wheels toward the traveling direction thereof, in the following case: the respective axes of the pair of electrode wheels are each tilted with respect to the straight line perpendicular to the welding line so that a portion of the electrode wheel located on the travel-directional side thereof faces in a horizontal plane toward a direction opposite to an extending direction of the metal plate with which the electrode wheel first comes into contact.
Fig. 7A illustrates the upper electrode wheel as viewed from vertically above in the state of the welding shown in Fig. 6 in order to clear the direction in which the upper electrode wheel is made to be tilted.
Fig. 7B illustrates a lower electrode wheel as viewed from vertically above in the state of the welding shown in Fig. 6 in order to clear the direction in which the lower electrode wheel is made to be tilted.
Fig. 8 illustrates a cross-section of the joint portion and the electrode wheels during welding, as viewed from the rearward of the electrode wheels toward the traveling direction thereof, in the following case: the respective axes of the pair of electrode wheels are each tilted with respect to the straight line perpendicular to the welding line so that a portion of the electrode wheel located on the travel-directional side thereof faces in the horizontal plane toward the extending direction of the metal plate with which the electrode wheel first comes into contact.
Fig. 9A illustrates the upper electrode wheel as viewed from vertically above in the state of the welding shown in Fig. 8 in order to clear the direction in which the upper electrode wheel is made to be tilted.
Fig. 9B illustrates the lower electrode wheel as viewed from vertically above in the state of the welding shown in Fig. 8 in order to clear the direction in which the lower electrode wheel is made to be tilted.
Fig. 10A illustrates a portion where a nugget is formed in the case where two metal plates having the same thickness are joined to each other by mash seam welding by use of the conventional electrode wheels whose axes are not tilted.
Fig. 10B illustrates the portion where a nugget is formed in the case where two metal plates having different thicknesses are joined to each other by use of the conventional electrode wheels whose axes are not tilted.
Fig. 11 illustrates the state of welding in the case where the tilt angle of the axis of the electrode wheel on the side of the thick metal plate is set to be greater than that on the side of the thin metal plate so that the respective thicknesses of the metal plates are equal to each other after the joint.
Fig. 12A illustrates the upper electrode wheel as viewed from vertically above in the state of the welding shown in Fig. 11 in order to clear the direction in which the upper electrode wheel is made to be tilted.
Fig. 12B illustrates the lower electrode wheel as viewed from vertically above in the state of the welding shown in Fig. 11 in order to clear the direction in which the lower electrode wheel is made to be tilted.
Fig. 13, similarly to Fig. 1, illustrates a state where the respective axes of the upper and lower electrode wheels are tilted before the start of the mash seam welding and the upper and lower electrode wheels are pressed against each other, and a state where upper and lower pressure rollers are pressed against each other.
Fig. 14 illustrates velocity vectors and a relative slip rate of the upper and lower electrode wheels encountered when the upper and lower electrode wheels are pressed and driven with the respective axes of the upper and lower electrode wheels tilted.
Fig. 15 schematically illustrates a control system for the mash seam welding apparatus shown in Fig. 1.
Fig. 16 illustrates an electrode wheel tilting mechanism which can vary the tilt angle of the axis of the electrode wheel to any angle.
Fig. 17 illustrates stress concentration points in the state where steps exist at a joint portion.
Fig. 18A illustrates a state of contact between a conventional mash seam welded portion and work rolls for a rolling mill.
Fig. 18B illustrates a state of contact between the mash seam welded portion and the work rolls for a rolling mill in the case where the metal plates are rolled with the axes of the electrode wheels tilted and the step defined at the joint portion is smoothed.
Fig. 19 is a schematic view of a mash seam welding apparatus according to another embodiment of the present invention.
Fig. 20A illustrates an initial state of rolling performed by a pair of pressure rollers in the case where the respective axes of the pressure rollers are tilted with respect to a straight line perpendicular to a welding line so that the travel-directional portions of the pressure rollers face in a horizontal plane toward the direction opposite to the extending direction of a metal plate concerning a metal material with which the pressure rollers first come into contact.
Fig. 20B illustrates a completion state of the rolling performed by the pressure rollers in the case of the rolling as illustrated in Fig. 20A.
Fig. 21A, compared to Fig. 20A, illustrates an initial state of rolling performed by the pair of pressure rollers in the case where the pressure rollers are tilted reversely, i.e., in the case where the respective axes of the pressure rollers are each tilted with respect to the straight line perpendicular to the welding line so that the travel-directional portions of the pressure rollers face in the horizontal plane toward the extending direction of the metal plate concerning the metal material with which the pressure rollers first come into contact.
Fig. 21B illustrates a completion state of the rolling performed by the pressure rollers in the case of the rolling as illustrated in Fig. 21A.
Fig. 22 illustrates correlation between material temperatures and deformation resistance in the case where a metal plate is common steel.

### Description of Reference Numerals

- 1:: Upper electrode wheel
- 1A:: Traveling-directional portion of electrode wheel
- 2:: Lower electrode wheel
- 2A:: Traveling-directional portion of electrode wheel
- 3:: Upper pressure roller
- 4:: Lower pressure roller
- 5:: Metal plate
- 5A:: End
- 6:: Metal plate
- 6A:: End
- 7:: Entry side clamp device
- 8:: Delivery side clamp device
- 9:: Carriage frame
- 10:: Electrode wheel pressing device
- 11:: Pressure roller pressing device
- 13:: Shearing force
- 14:: Thrust force
- 15:: Upper pressure roller axis
- 16:: Lower pressure roller axis
- 17:: Upper electrode wheel axis
- 18:: Lower electrode wheel axis
- 22:: Upper work roll
- 23:: Lower work roll
- 27:: Tilting mechanism for tilting electrode wheel
- 28:: Velocity vector of upper electrode wheel
- 29:: Velocity vector of lower electrode wheel
- 30:: Relative slip rate
- 45:: Straight line in direction perpendicular to pressure roller axis
- 46:: Contact arc length portion
- 51, 52:: Mounting blocks
- 54:: Support roller
- 55:: Base plate
- 57:: Cylinder device for driving carriage frame
- 61,: 62: Electric motors
- 63,: 64: Electric motors
- 67, 68:: Chain and sprocket mechanisms
- 71:: Upper controller
- 72:: Carriage frame drive controller
- 73:: Mash seam controller
- 74:: Pressure roller controller
- 75:: Laser distance meter
- 81:: Rotating shaft
- 82,: 83: Pinions
- 84:: Electric motor
- 85:: Tilt angle controller
- 86:: Angle sensor
- L:: Overlapping portion
- J:: Joint portion
- S:: Step
- N:: Nugget
- A:: Traveling direction (rolling direction)
- X:: Welding line (joint line)
- Y:: Direction perpendicular to welding line
- R:: Velocity vector of pressure roller in contact arc length portion
- R1:: Component of velocity vector R in direction of welding line X
- R2:: Component of velocity vector R in direction perpendicular to welding line X
- α, α1, α2:: Tilt angle

### Best Mode for Carrying Out the Invention

Embodiments of the present invention will hereinafter be described with reference to the drawings. A metal plate of the embodiments is described taking a cold rolling for steel product plant as an example.

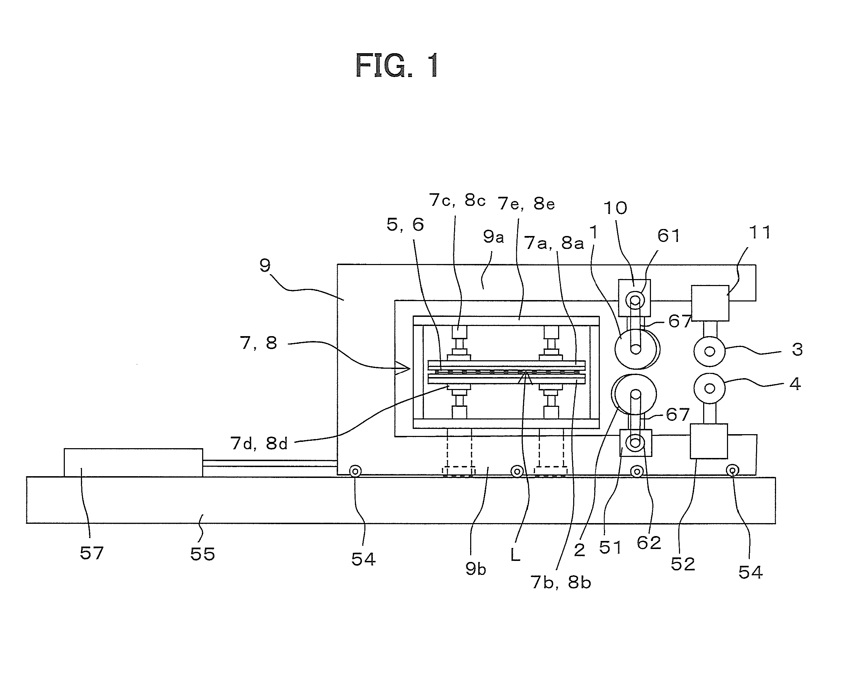

Fig. 1 is a schematic view of a mash seam welding apparatus according to an embodiment of the present invention.

Referring to Fig. 1, a mash seam welding apparatus according to the embodiment includes a pair of upper and lower electrode wheels 1, 2, a pair of upper and lower pressure rollers 3, 4, entry side and delivery side clamp devices 7, 8, a carriage frame 9, an electrode wheel pressing device 10, and a pressure roller pressing device 11. The electrode wheel pressing device 10 and the pressure roller pressing device 11 are hydraulic cylinders, for example. The upper electrode wheel 1 and the upper pressure roller 3 are supported by an upper horizontal frame 9a of the carriage frame 9 via the electrode wheel pressing device 10 and the pressure roller pressing device 11, respectively. In addition, the lower electrode wheel 2 and the lower pressure roller 4 are supported by a lower horizontal frame 9b of the carriage frame 9 via mounting blocks 51 and 52, respectively. The pair of upper and lower pressure rollers 3, 4 is arranged adjacently to the pair of upper and lower electrode wheels 1, 2 in the carriage frame 9.

The carriage frame 9 is provided with support rollers 54 on its bottom portion. In addition, the carriage frame 9 can be shifted on a base plate 55 via the support rollers 54 in a direction (welding direction) perpendicular to two metal plates 5, 6 to be joined to each other. The entry side clamp device 7 includes a pair of upper and lower clamp members 7a, 7b, upper and lower pressing cylinder devices 7c, 7d, and a support frame 7e. The clamp members 7a and 7b are supported by the upper and lower pressing cylinder devices 7c and 7d, respectively, in the support frame 7e. The delivery side clamp device 8 includes a pair of upper and lower clamp members 8a, 8b, upper and lower pressing cylinder devices 8c, 8d, and a support frame 8e. The clamp members 8a and 8b are supported by the upper and lower pressing cylinder devices 8c and 8d, respectively, in the support frame 8e. The support frames 7e, 8e are supported on the base plate 55.

The mash seam welding apparatus includes a pair of upper and lower electric motors 61, 62 for drivingly rotating the corresponding electrode wheels. The pair of upper and lower electric motors 61, 62 is mounted on the corresponding lateral surfaces of the electrode wheel pressing device 10 and of the mounting block 51. The electric motors 61, 62 are connected to the corresponding rotating shafts of the electrode wheels 1, 2 via e.g. corresponding chain and sprocket mechanisms 67. Thus, the rotative power of the electric motors 61, 62 is transmitted to the corresponding electrode wheels 1,2.

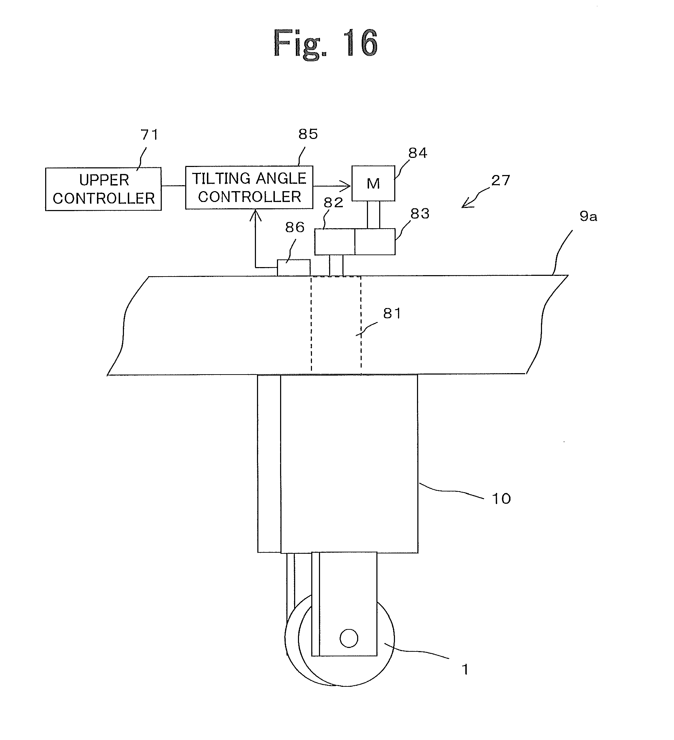

The electrode wheel pressing device 10 is provided with a tilting mechanism 27 (Fig. 16) for tilting the axis of each of the electrode wheels 1, 2.

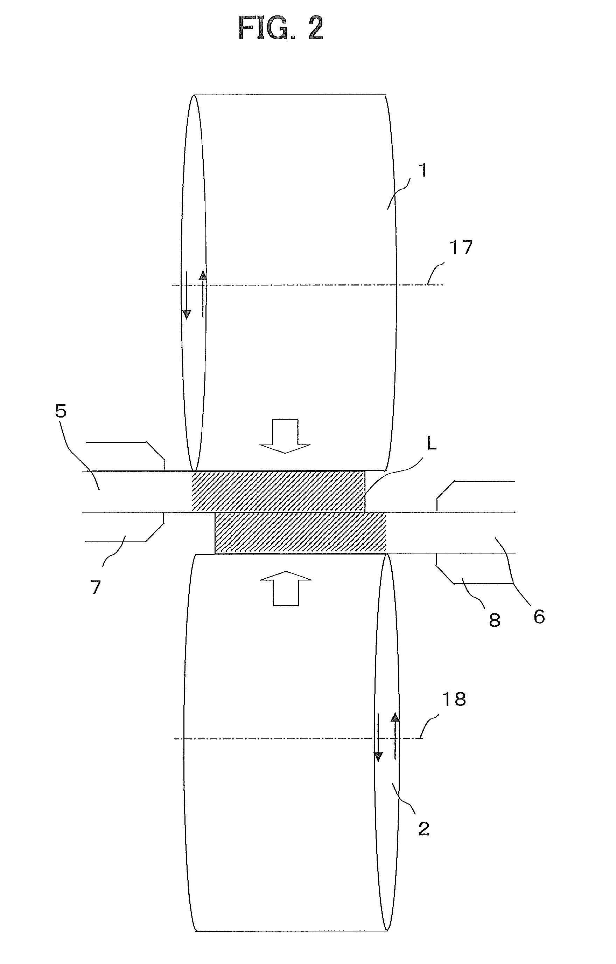

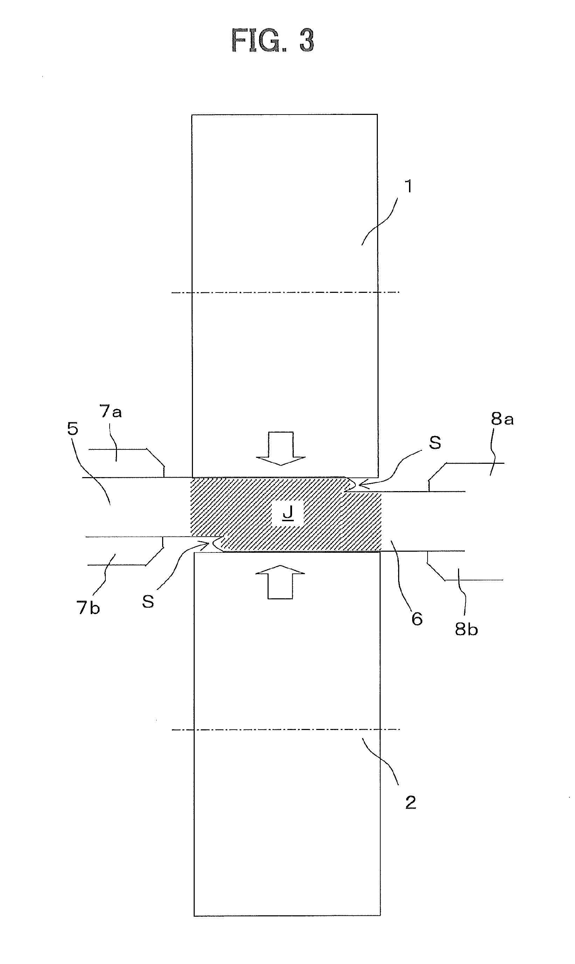

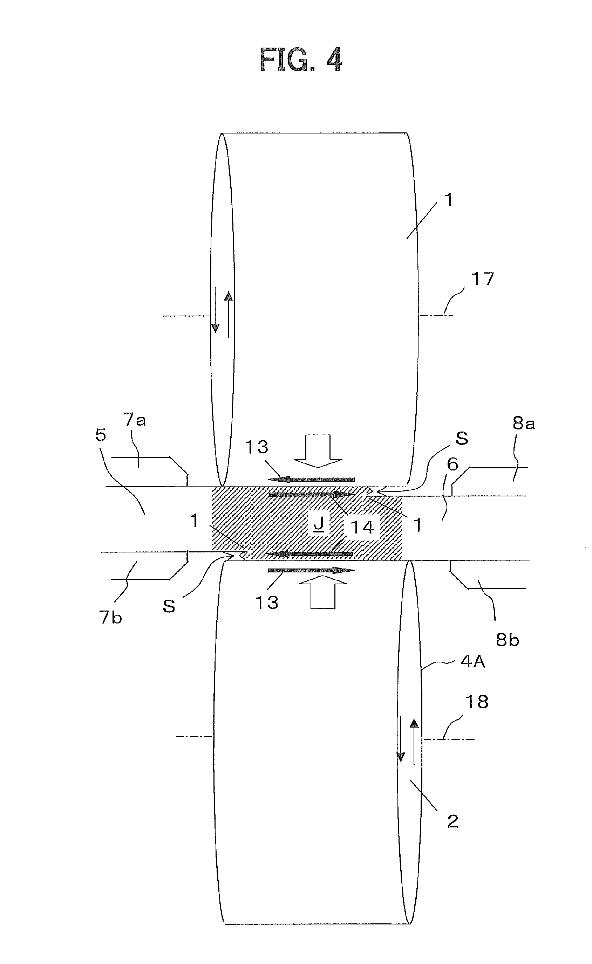

Fig. 2 illustrates a welding start state where the two metal plates 5, 6 having the same thickness are placed to overlap each other, and their overlapping portions are pressed by the pair of upper and lower electrode wheels 1, 2 of the present embodiment. Fig. 3 illustrates the shape of a joint portion having steps formed immediately after the two metal plates 5, 6 having the same thickness have been joined to each other by mash seam welding by use of conventional electrode wheels whose axes are not tilted. Fig. 4 illustrates the shape of a joint portion having steps formed immediately after the two metal plates 5, 6 have been joined to each other by mash seam welding by use of the two electrode wheels 1, 2 according to the present embodiment.

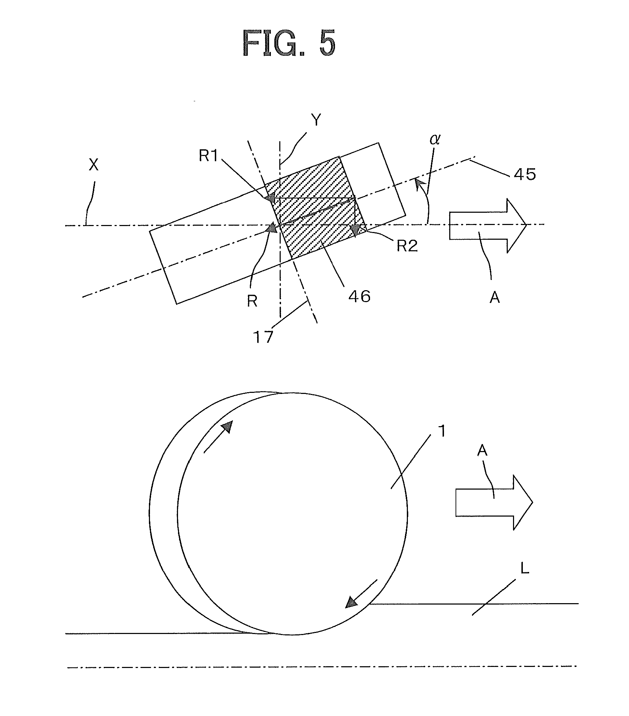

Referring to Figs. 2 and 4, in the present embodiment, the pair of upper and lower electrode wheels 1, 2 is installed in such a manner that the axes 17, 18 of the electrode wheels 1, 2 tilt in a horizontal plane in respective directions opposite to each other with respect to an axis Y (see Fig. 5) perpendicular to a welding line X (see Fig. 5) formed in overlapping portions L (hatched portions in Fig. 2) of the two metal plates 5, 6. In addition, the electrode wheels 1 and 2 are positively driven by the electric motors 61 and 62, respectively, to join the two metal plates 5, 6. The electrode wheel pressing device 10 is provided with the tilting mechanism 27 (Fig. 16) for adjusting the tilt angle of each of the respective axes 17, 18 of the electrode wheels 1, 2.

When the metal plates 5, 6 are to be joined to each other, the respective end portions of the metal plates 5, 6 are placed to overlap each other. In this state, the metal plates 5, 6 are gripped and positionally fixed by the corresponding clamp members 7a, 7b; 8a, 8b of the entry side and delivery side clamp devices 7, 8. Then, the carriage frame 9 is shifted in the welding direction by a drive device such as a cylinder device 57 or the like installed on the base plate 55. This relatively shifts the pair of upper and lower electrode wheels 1, 2 and the pair of upper and lower pressure rollers 3, 4 supported by the carriage frame 9 with respect to the metal plates 5, 6. In this way, joining and pressurizing are continuously performed. In this case, the overlapping portions L of the metal plates 5, 6 are gripped by the pair of upper and lower electrode wheels 1, 2, and the electrode wheels 1, 2 are pressed against the overlapping portions L of the metal plates 5, 6 by the electrode wheel pressing device 10. While the electrode wheels 1, 2 are positively drivingly rotated by the respective electric motors 61, 62, a welding current is allowed to flow into the electrode wheels 1, 2 to generate resistance heat. Thus, welding (mash seam welding) is performed. Then, the overlapping portions L are welded by the electrode wheels 1, 2. Immediately thereafter, the joint portion (the welded portion) J of the metal plates 5, 6 is gripped by the pair of upper and lower pressure rollers 3, 4, and then the pressure rollers 3, 4 are pressed against the joint portion J by the pressure roller pressing device 11 to thereby roll the joint portion J of the metal plates 5, 6.

Referring to Fig. 3, if mash seam welding is performed using conventional electrode wheels 1, 2 whose axes are not tilted, the thickness of a joint portion J (the hatched portion in Fig. 3) is increased to approximately 120% to 160% of the thickness of a base material, i.e., of the metal plates 5, 6. This creates steps S between the joint portion and the base material (the metal plates 5, 6). More specifically, in the conventional technology in which the electrode wheels 1, 2 are not tilted, the electrode wheels 1, 2 are pressed against the overlapping portions L of the metal plates 5, 6 by the electrode wheel pressing device 10 to roll it while the overlapping portions L are welded. Even in such a case, the thickness of the joint portion cannot be reduced to the thickness of the base material, i.e., of the metal plates by the electrode wheels 1, 2. This is because plastic flow in a direction perpendicular to the welding line is limited by being restrained by the frictional coefficient between the electrode wheels 1, 2 and the material. In addition, this is because the plastic flow in the traveling direction of the electrode wheels 1, 2 is restrained by the base material adjacent thereto.

In the present embodiment as described above, the pair of upper and lower electrode wheels 1, 2 is arranged in such a manner that their axes 17, 18 are tilted in the horizontal plane in the respective directions opposite to each other with respect to a straight line (a straight line in a direction perpendicular to the welding line) perpendicular to the welding line of the overlapping portion L. The mash seam welding is performed while the electrode wheels 1, 2 are positively driven by the respective electric motors 61, 62.

In this way, a shearing force 14 is applied to the overlapping portions L in the direction of the straight line Y perpendicular to the welding line (the joint line) X, i.e., in the direction perpendicular to the welding line, as well as in the rolling direction (the travelling direction of the electrode wheels 1, 2 and the pressure rollers 3, 4). Shear deformation by this shearing force 14 promotes the plastic flow in the direction perpendicular to the welding line. This significantly reduces the thickness of the joint portion (the increased amount of thickness of the joint portion). Consequently, immediately thereafter, the joint portion J is rolled out by the pressure rollers 3, 4 to further reduce the increased amount of thickness of the joint portion J to a thickness corresponding to the thickness of the base material, i.e., of the metal plates, which can significantly reduce the step-gradient. Because of the reduced step-gradient, a stress concentration factor is reduced, thereby ensuring a high degree of joint strength.

The operation in which the plastic flow (metal flow) in the direction perpendicular to the welding line is promoted by tilting the respective axes 17, 18 of the pair of upper and lower electrode wheels 1, 2 is described in detail by use of Fig. 5.

Fig. 5 illustrates metal flow in a contact arc length in the case where the overlapping portions L are joined to each other with the respective axes 17, 18 of the electrode wheels 1, 2 tilted. In addition, Fig. 5 illustrates the case of the upper electrode wheel 1 as an example. In the figure, symbol A is an arrow denoting the traveling direction (the welding direction) of the electrode wheel 1. Symbol X is a straight line imaginarily denoting the welding line defined in the overlapping portion L lying in the welding direction A. Symbol Y denotes a straight line perpendicular to the welding line X. Reference numeral 45 denotes a straight line (the straight line in a direction perpendicular to the axis) perpendicular to the axis 17 of the electrode wheel 1, the straight line 45 passing the widthwise central portion of the electrode wheel 1. Symbol α denotes a tilt angle of the electrode wheel 1 (an angle between the welding line X and the straight line 45 extending in the direction perpendicular to the axis of the upper electrode wheel 1). Further, reference numeral 46 denotes a contact arc length portion where the electrode wheel 1 is in contact with the overlapping portion L. Symbol R denotes the velocity vector of the electrode wheel 1 in the contact arc length portion 46. Symbol R1 denotes a component of the velocity vector R in the direction of the welding line X, and Symbol R2 denotes a component of the velocity vector R in the direction perpendicular to the welding line X.

Referring to Fig. 5, the electrode wheel 1 is positively drivingly rotated while being pressed against the overlapping portion L with the axis 17 of the electrode wheel 1 tilted in the horizontal plane with respect to the straight line Y perpendicular to the welding line X. Due to the pressing force and frictional coefficient between the electrode wheel 1 and the overlapping portion L, a shearing force corresponding to the velocity vector component R2 in the direction perpendicular to the welding line X in the contact arc length portion 46 with the overlapping portion L is applied to the overlapping portion L. Not only metal flow in the direction (the direction parallel to the welding line X) of the velocity vector component R1 but also metal flow in the direction (the direction perpendicular to the welding line X) of the velocity vector component R2 occur at the overlapping portion L. In other words, plastic flow in the direction perpendicular to the welding line X due to shear deformation by the shearing force 14 occurs at the overlapping portion L. Thus, the shear deformation or plastic flow in the direction perpendicular to the welding line X can reduce the thickness (the thickness of the joint portion) after the joint of the overlapping portion L.

As described above, the pair of electrode wheels 1, 2 is positively driven by the respective electric motors 61, 62 with the respective axes 17, 18 of the electrode wheels 1, 2 tilted with respect to the straight line Y perpendicular to the welding line X. At the same time, the overlapping portions L are welded while being pressed. The shearing force 14 is applied to the overlapping portions L in the direction perpendicular to the welding line. Thus, the thickness of the joint portion of the overlapping portions L is reduced. The shearing force 14 depends on the deformation resistance of the material; therefore, the higher the deformation resistance is, the more a thrust force 13 applied to the electrode wheels 1, 2 from the corresponding metal plates 5, 6 is increased. If the thrust force 13 is increased as described above, there arise problems in that the electrode wheels 1, 2 and their bearings are reduced in operating life and the entire device is enlarged because of setting a holding force for the thrust force 13.

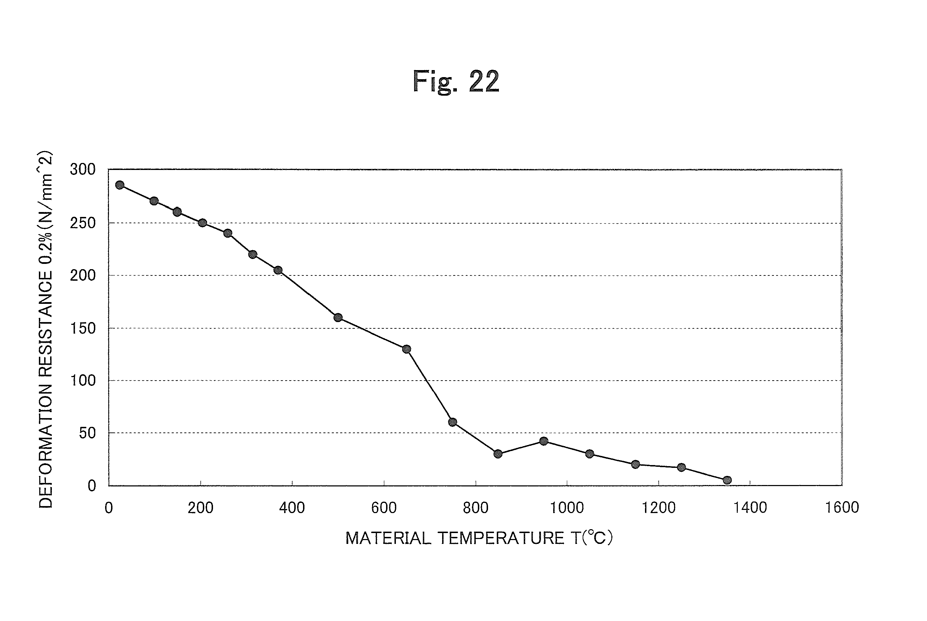

In the present embodiment, the thrust force 13 due to the tilt of the respective axes 17, 18 of the electrode wheels 1, 2 described above occurs during the heating welding (mash seam welding) of the overlapping portions L. During the mash seam welding, the temperature in the vicinity of the joint portion rises up to approximately 1000°C to 1400°C although depending on the thickness of the metal plates. Thus, it is presumed that the temperature of the joint portion J rises up to a level higher than such temperatures. In contrast, if the deformation resistance of the metal plates 5, 6 depends on the material temperature and the temperature of the joint portion J is approximately 1000°C to 1400°C, the deformation resistance is extremely low (see Fig. 22). Therefore, the installation can be reduced in size by suppressing an increase in the thrust force 13. Because of shearing deformation at high temperature, the thickness of the joint portion can be reduced effectively.

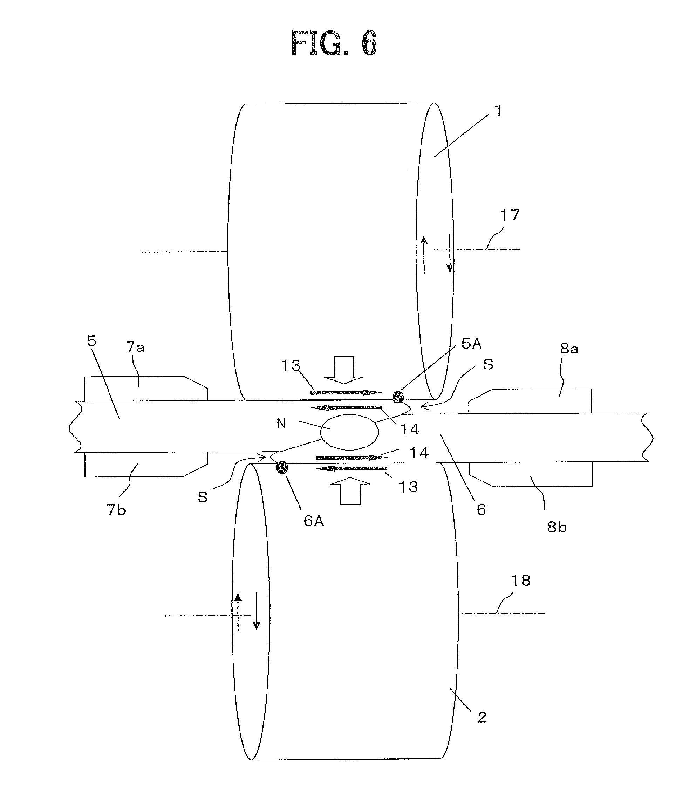

Figs. 6, 7A and 7B; and 8, 9A and 9B illustrate two kinds of states of setting the direction of a tilt angle α of the pair of upper and lower electrode wheels 1, 2.

The direction of the tilt angle α of the pair of upper and lower electrode wheels 1, 2 can be set in two ways.

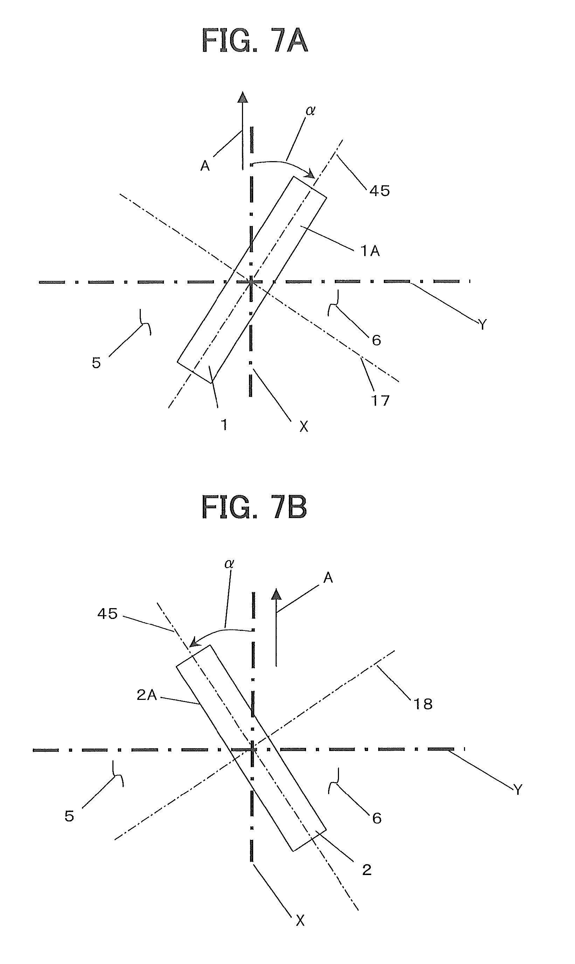

A first setting method is as below. As illustrated in Figs. 6, 7A and 7B, the respective axes 17, 18 of the pair of electrode wheels 1, 2 are each tilted with respect to the straight line Y perpendicular to the welding line X in such a manner that portions 1A, 2A (hereinafter, called the traveling-directional portions) located on the side of the traveling direction A of the electrode wheels 1, 2 face in the horizontal plane toward the corresponding directions opposite to the extending directions of the metal plates with which the respective electrode wheels 1, 2 first come into contact. In short, the traveling-directional portion 1 A of the upper electrode wheel 1 is tilted toward the right metal plate 6 in the figure and the traveling-directional portion 2A of the lower electrode wheel 2 is tilted toward the left metal plate 5 in the figure. In this case, the shearing force 14 corresponding to the velocity vector component R2 is applied from the electrode wheels 1, 2 to the corresponding metal plates 5, 6 in the direction from the respective ends 5A, 6A of the metal plates 5, 6 to the respective extending directions of the metal plates 5, 6. Thus, the mash seam welding is performed while applying shear deformation in the same direction, i.e., in the direction perpendicular to the welding line, thereby reducing the thickness of the joint portion. Incidentally, a force in a direction opposite to that of the shearing force 14 is applied as the thrust force 13 from the overlapping portions L (the joint portion J) to the electrode wheels 1, 2. In other words, the reactive force of the thrust force 13 is applied to the overlapping portions L as the shearing force 14.

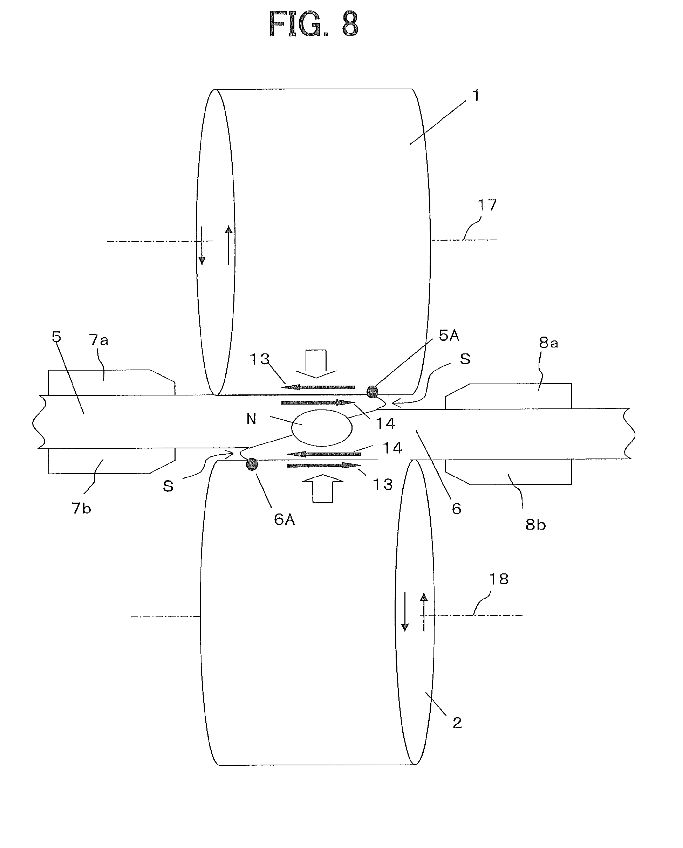

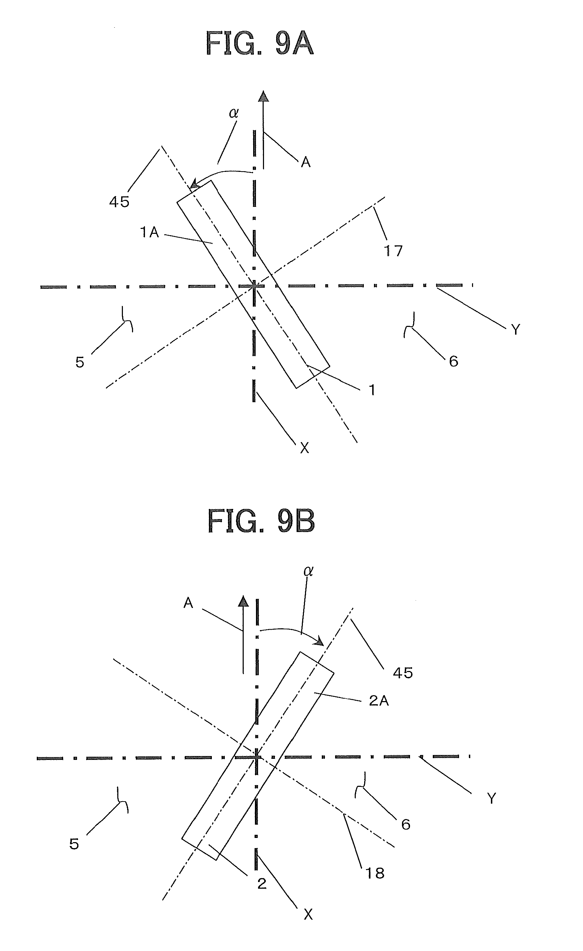

Referring to Figs. 8, 9A and 9B, a second setting method is such that the electrode wheels 1, 2 are tilted reversely to those of the first setting method. Specifically, the respective axes 17, 18 of the pair of electrode wheels 1, 2 are each tilted with respect to the straight line Y perpendicular to the welding line X so that the respective traveling-directional portions 1 A, 2A of the electrode wheels 1, 2 face in the horizontal plane toward the corresponding extending directions of the metal plates with which the respective electrode wheels 1, 2 first come into contact. In short, the traveling-directional portion 1 A of the upper electrode wheel 1 is tilted toward the left metal plate 5 in the figure and the traveling-directional portion 2A of the lower electrode wheel 2 is tilted toward the right metal plate 6 in the figure. In this case, the shearing force 14 corresponding to the velocity vector component R2 is applied from the electrode wheels 1, 2 to the corresponding metal plates 5, 6 in the direction from the respective extending directions of the metal plates 5, 6 to the respective ends 5A, 6A of the metal plates 5, 6. Thus, the mash seam welding is performed while applying shear deformation in the same direction, i.e., in the direction perpendicular to the welding line, thereby reducing the thickness of the joint portion. Also in this case, a force in a direction opposite to that of the shearing force 14 is applied as the thrust force 13 from the overlapping portions L (the joint portion J) to the electrode wheels 1, 2.

The present embodiment employs the second setting method. The reason is as follows.

In general, the material of the electrode wheels 1, 2 is applied with a copper-based material with high electric conductivity. The copper-based material has a problem of being inferior in material strength to the joining material. The respective axes 17, 18 of the pair of electrode wheels 1, 2 may be tilted so that the respective traveling-directional portions 1 A, 2A of the electrode wheels 1, 2 face in the horizontal plane toward he corresponding directions opposite to the extending directions of the metal plates with which the electrode wheels 1, 2 first come into contact. In addition, the shearing force 14 may be applied to the metal plates 5, 6 from the respective electrode wheels 1, 2 in the direction from the respective end portions 5A, 6A of the metal plates 5, 6 to the respective extending directions of the metal plates 5, 6. In such a case, the electrode wheels 1, 2 travel in the direction in which the electrode wheel surfaces bite into the corresponding corners of the end portions 5A, 6A of the metal plates 5, 6, along with the progress of the welding. This poses a new problem in that the electrode wheel surfaces are scratched by the corners of the joining material. In such a case, current density locally concentrates between the electrode wheels 1, 2 and the material, which causes spattering and significantly reduces the operating life of the electrode wheel.

In contrast to this, the respective axes 17, 18 of the pair of electrode wheels 1, 2 may be tilted so that the respective traveling-directional portions 1 A, 2A of the electrode wheels 1, 2 face in the horizontal plane toward the corresponding extending directions of the metal plates with which the electrode wheels 1, 2 first come into contact. In addition, the upper shearing force 14 may be applied to the metal plates 5, 6 from the respective electrode wheels 1, 2 in the direction from the respective extending sides of the metal plates 5, 6 to the respective end portions 5A, 6A thereof. In such a case, it is possible to prevent the electrode wheels 1, 2 from being scratched due to biting into the corners of the end portions 1 A, 2A of the metal plates 1, 2 and to apply the shearing stress toward the metal plates 5, 6.

The tilt angle α of the axes 17, 18 of the electrode wheels 1, 2 is set according to the thicknesses of the metal plates 5, 6. Qualitatively, the tilt angle α is set to a small value if the thicknesses of the metal plates are small; the tilt angle α is set to a larger value as the thicknesses of the metal plates become larger. As illustrated in Fig. 5, the shear deformation due to the tilt of axis 17 of the upper electrode wheel 1 is predominated by the tilt angle α in the contact arc length portion 46 between the upper electrode wheel 1 and the material. Therefore, the tilt angle α set according to the thicknesses of the metal plates 5, 6 is adjusted appropriately. If the metal plates 5, 6 made of materials different in thickness from each other are joined to each other, the tilt angle α of the upper electrode wheel 1 is set according to the thickness of the metal plate located on the upper side of the overlapping portions L and the tilt angle α of the lower electrode wheel 2 is set according to the thickness of the metal plate located on the lower side of the overlapping portions L. In short, if the metal plates different in thickness from each other are joined to each other, the upper and lower electrode wheels 1, 2 are made different in tilt angle α from each other.

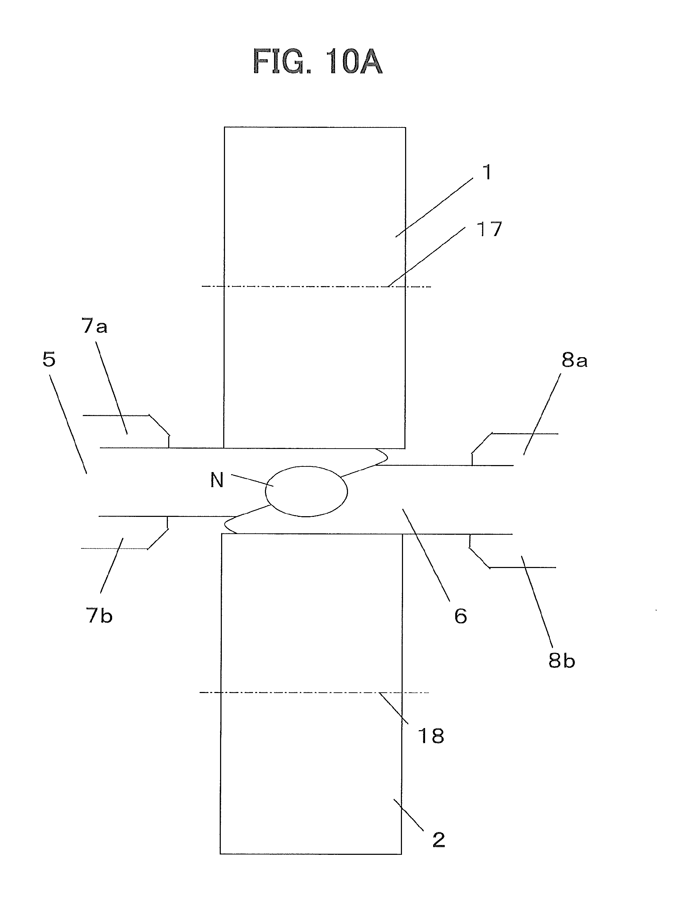

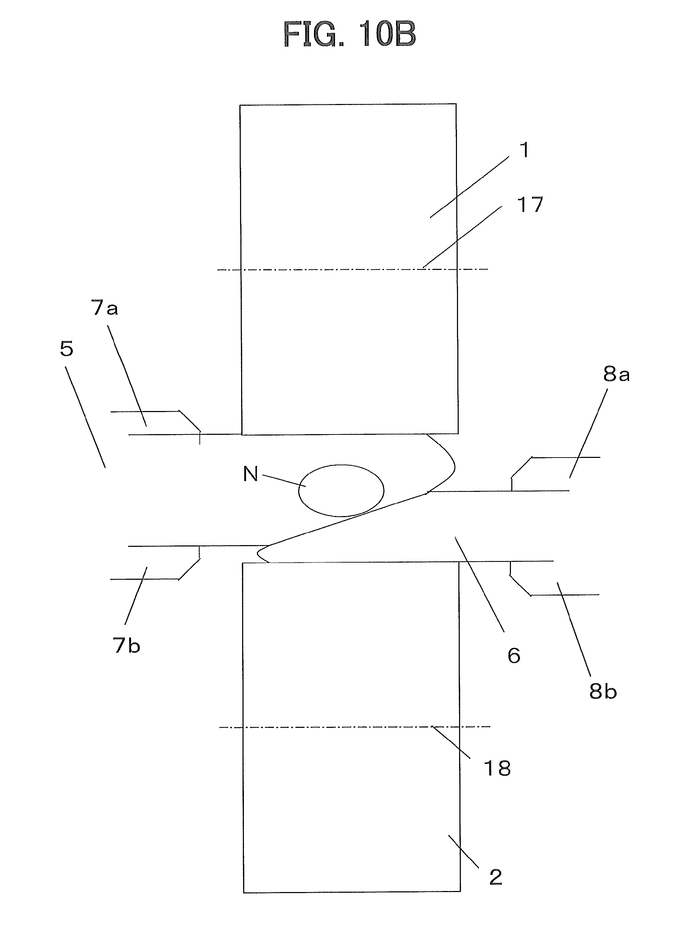

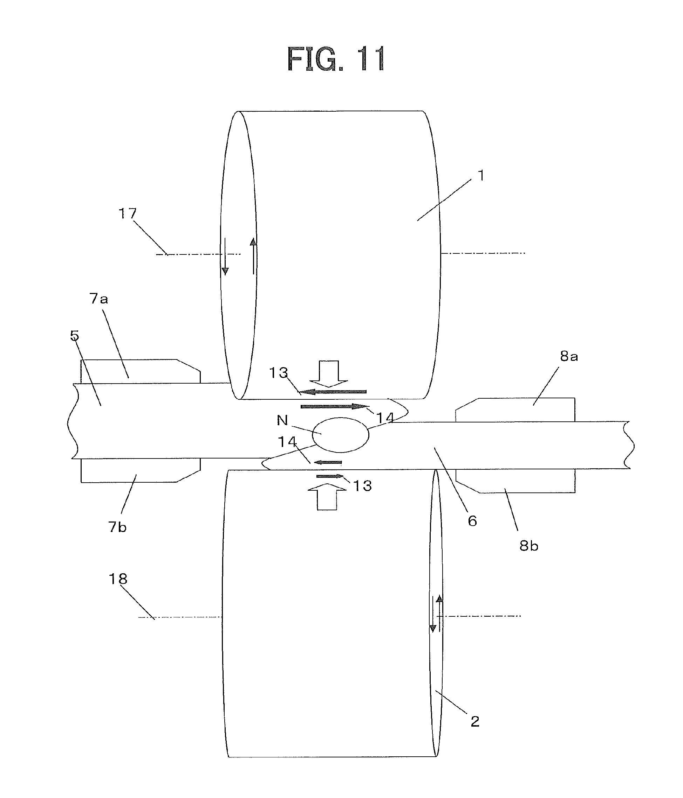

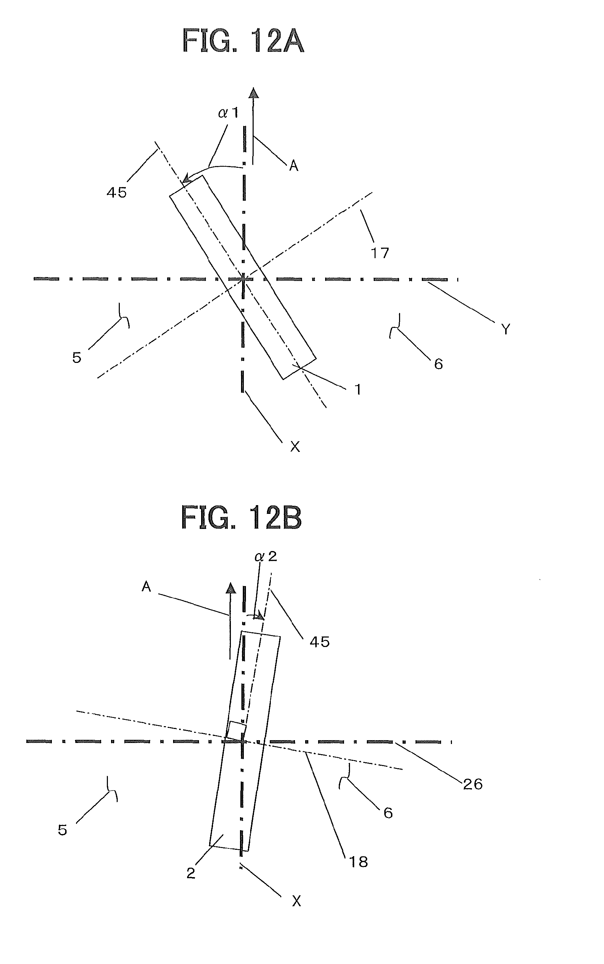

Figs. 10A and 10B illustrate a portion where a nugget is formed in the case where two metal plates 5, 6 are joined to each other by mash seam welding by use of the conventional electrode wheels whose axes are not tilted. Fig. 10A illustrates the case where metal plates with the same thickness are joined to each other and Fig. 10B illustrates the case where metal plates having different thicknesses are joined to each other. Figs. 11, 12A and 12B illustrate a portion where a nugget is formed and a difference in tilt angle between the upper and lower electrode wheels 1, 2 in the case where the metal plates 5, 6 having different thicknesses are joined to each other by mash seam welding by use of the electrode wheels 1, 2 according to the present embodiment.

In mash seam welding, as illustrated in Fig. 10A, a nugget N is formed at a thickness-central portion of the metal plates 5, 6 gripped by the electrode wheels 1, 2. If a difference in thickness between the metal plates 5, 6 is small, a nugget N is formed at the central portion of a joint interface. However, if a difference in thickness between the metal plates 5, 6 is large, there is a problem in that a nugget N deviates from the central portion of the joint interface as illustrated in Fig. 10B. This restriction has limited the thickness-difference ratio of the joint thickness between the metal plates 5, 6 in the mash seam welding method to approximately 1 : 1.5 or lower.

In the present invention, as illustrated in Figs. 11, 12A and 12B, the respective axes 17, 18 of the electrode wheels 1, 2 are tilted with respect to the straight line Y perpendicular to the welding line X so that the respective traveling-directional portions 1A, 2A of the electrode wheels 1, 2 face in the horizontal plane toward the corresponding extending directions of the metal plates 5, 6 with which the corresponding electrode wheels 1, 2 first come into contact. In addition, a tilt angle α1 of the upper electrode wheel 1 in contact with the metal plate 5 which is a thick metal plate is made greater than a tilt angle α2 of the lower electrode wheel 2 in contact with the metal plate 6 which is a thin metal plate. In this way, more shear deformation (shear stress) in the direction perpendicular to the welding line as well as the pressing force between the electrode wheels 1, 2 and the corresponding materials of metal plates 5, 6 is applied to the material of the thick metal plate 5. Thus, it is possible to form a joint so that the respective thicknesses of the metal plate portions become roughly equal to each other after the overlapping joint.

The tilt angles α1, α2 are set according to the thickness-difference amount so as to apply the shear deformation necessary to reduce thickness-difference. With this setting, the nugget N can be formed on the joint interface. The thickness-difference ratio can be increased without lowering the joint strength. The increased amount of thickness of the overlapping joint portion J can be reduced to reduce the restriction in terms of operation. Joint quality encountered when the metal plates having different thicknesses are joined to each other can be enhanced.

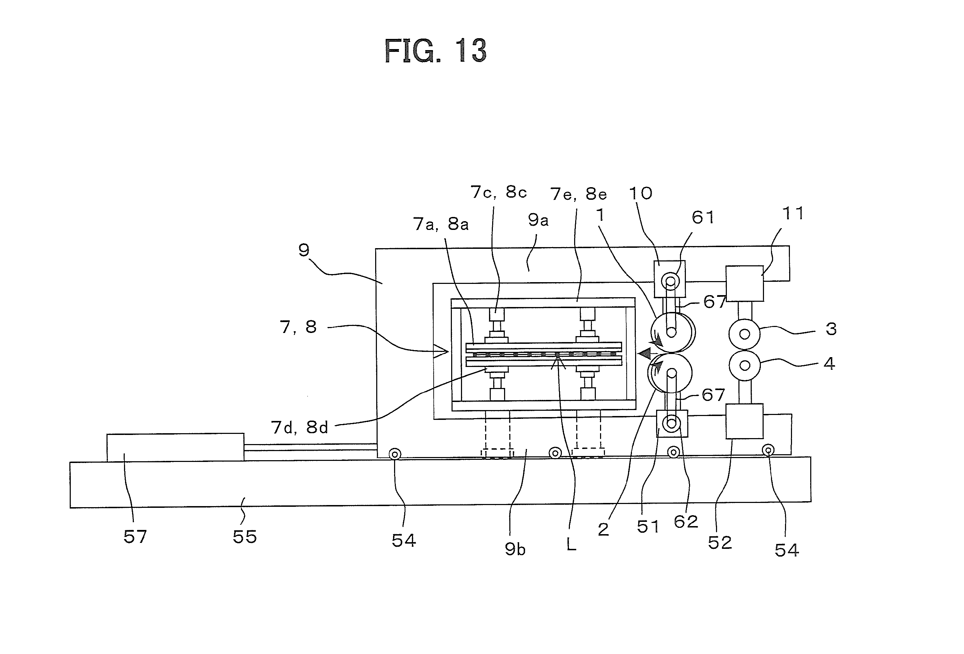

Fig. 13, similarly to Fig. 1, illustrates a state where the respective axes of the upper and lower electrode wheels are tilted before the start of the mash seam welding and the upper and lower electrode wheels are pressed against each other and a state where the upper and lower pressure rollers are pressed against each other.

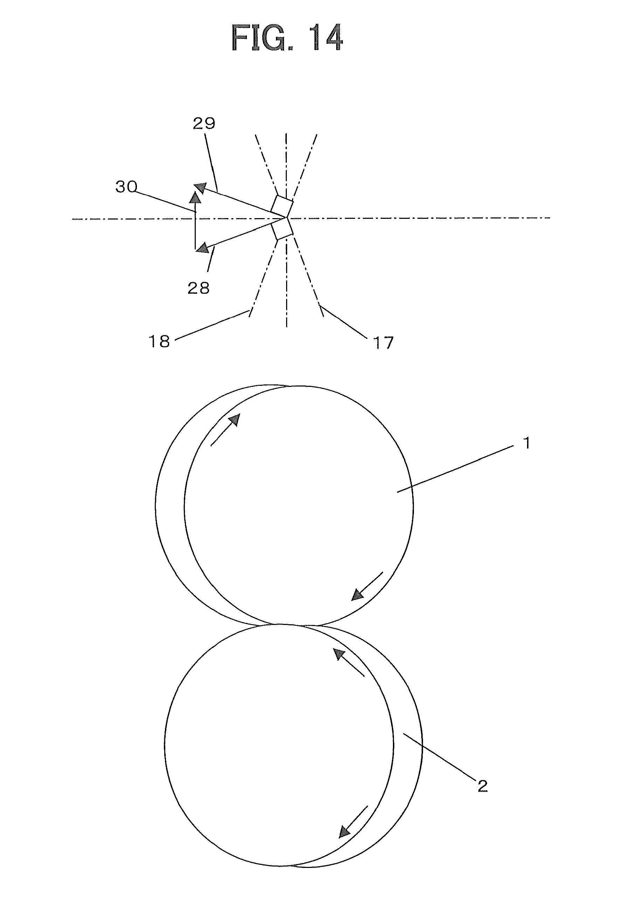

Fig. 14 illustrates velocity vector and a relative slip rate of the upper and lower electrode wheels encountered when the upper and lower electrode wheels are pressed and driven with the respective axes of the upper and lower electrode wheels tilted.

Conventional mash seam welding has heretofore been performed while the electrode wheels 1, 2 roll the overlapping portions from their end portions. In such a case, as illustrated in Fig. 13, the electrode wheels 1, 2 are pressed against each other and rotated in the state before the start of the joining. After the upper and lower electrode wheels 1, 2 have reached the end portions of the overlapping portions L, they start rolling and welding as they are. If the upper and lower electrode wheels 1, 2 are pressed and rotated with the axes 17, 18 thereof tilted, as illustrated in Fig. 14, respective roller velocity vectors 28, 29 of the upper and lower electrode wheels 1, 2 do not conform with each other so that a relative slip rate 30 is generated in the axial directions of the electrode wheels 1, 2. This relative slip rate 30 generates a thrust force in the axial directions of the upper and lower electrode wheels 1, 2 due to the pressing force and frictional coefficient between the electrode wheels 1, 2. The thrust force reduces the operating life of an electrode wheel bearing and produces stick-slip between the electrode wheels 1, 2. This promotes abnormal vibration of a mechanical system and the wear of the electrode wheels 1, 2. For this reason, in the present invention, at least one, preferably, both processes before the start of the welding of the overlapping portions L and after the completion of the welding of the overlapping portions L select a first setting or a second setting. In the first setting, the upper and lower electrode wheels 1, 2 are brought into contact with each other. In the second setting, the upper and lower electrode wheels 1, 2 are not brought into contact with each other, or are brought into contact with each other at a light load compared with the pressing force during the welding. In the former, i.e., in the first setting, the rotation of the upper and lower electrode wheels 1, 2 by the corresponding electric motors 61, 62 is made non-driven.
In the latter, i.e., in the second setting, the rotation of the upper and lower electrode wheels 1, 2 by the corresponding electric motors 61, 62 is made driven. In the first setting, after the upper and lower electrode wheels 1, 2 have reached the lateral end portions of the overlapping portions L, the actuation of the electric motors 61, 62 is immediately started to positively drivingly rotate the upper and lower electrode wheels 1, 2. In the second setting, after the upper and lower electrode wheels 1, 2 have reached the lateral end portion of the joint portion J, the driving of the electrode wheel pressing device 10 is immediately switched to the setting for the welding to apply the pressing force to the upper and lower electrode wheels 1, 2. In this way, the generation of the thrust force can be prevented to elongate the operating life of the bearing and also to suppress the wear of the upper and lower electrode wheels 1, 2.

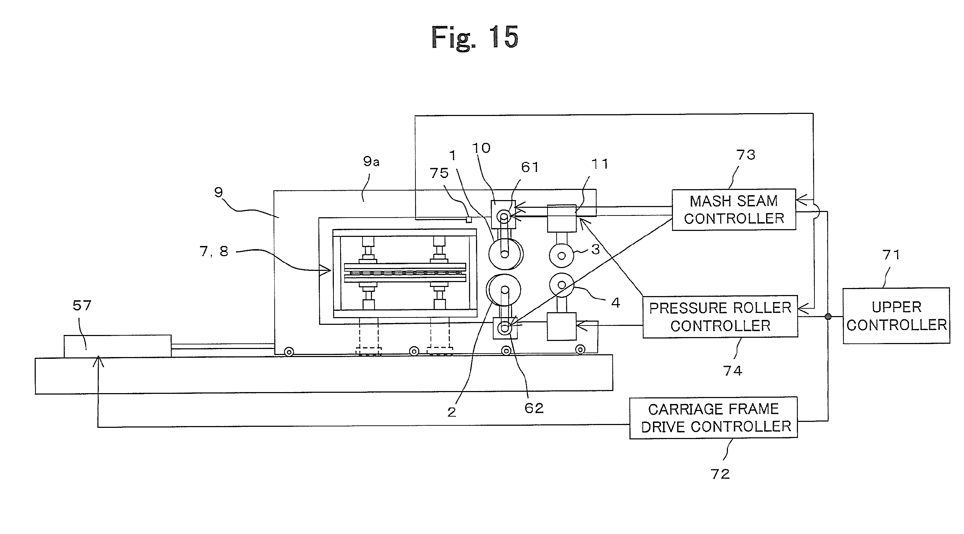

Fig. 15 schematically illustrates a control system for the mash seam welding apparatus shown in Fig. 1. The control system for the mash seam welding apparatus includes an upper controller 71, a carriage frame drive controller 72, a mash seam controller 73 and a pressure roller controller 74. The upper controller 71 unifies control for the carriage frame drive controller 72, the mash seam controller 73 and the pressure roller controller 74. The carriage frame drive controller 72 gives operating instructions to a hydraulic circuit (not shown) of the cylinder device 57 for driving the carriage frame 9 to control the drive of the cylinder device 57. The mash seam controller gives operating instructions to a hydraulic circuit (not shown) of the electrode wheel pressing device 10 and the electric motors 61, 62 to control the drive thereof. The pressure roller controller gives operating instructions to a hydraulic circuit (not shown) of the pressure roller pressing device 11 to control the drive thereof. A laser distance meter 75 is installed on the upper horizontal frame 9a of the carriage frame 9 and adjacently to the upper electrode wheel 1. The mash seam controller 73 and the pressure roller controller 74 receives the detection signal of the laser distance meter 75 and detects, on the basis of the signal, the timing when ends of the overlapping portions of the metal plates 5, 6 reach directly below the laser distance meter 75. The mash seam controller 73 and the pressure roller controller 74 previously stores a distance between the laser distance meter 75 and each of the electrode wheels 1, 2 and between the laser distance meter 75 and each of the pressure rollers 3, 4, and the travel speed of the carriage frame 9. The timing when the ends of the overlapping portions of the metal plates 5, 6 reach immediately below the laser distance meter 75 and the timing when the electrode wheels 1, 2 and the pressure rollers 3, 4 grip the ends of the overlapping portions of the metal plates 5, 6 are calculated based on the distances and the travel speed. Before or after such timing, the control for the electrode wheel pressing device 10 and the electric motors 61, 62 and the control for the pressure roller pressing device 11 are appropriately made different according to the above-described setting state (the first or second setting) relating to the contact between the upper and lower electrode wheels 1, 2.

The tilt angles of the axes of the electrode wheels 1, 2 may be fixed. However, it is preferred that the tilt angles be variable to any angle. Fig. 16 illustrates a tilting mechanism for the electrode wheel in such a case. Incidentally, to avoid complexity of illustration, an electric motor, a chain and sprocket mechanism for drivingly rotating the electrode wheel are omitted in the drawing.

Referring to Fig. 16, the electrode wheel pressing device 10 is provided with a tilting mechanism 27. The tilt angle of the axis of the upper electrode wheel 1 can be set at any angle in the horizontal plane by actuating the tilting mechanism 27. The tilting mechanism 27 can employ various methods; however, it employs an electrical drive type as an example in the figure. More specifically, the tilting mechanism 27 is installed on the upper end of the electrode wheel pressing device 10. In addition, the tilting mechanism 27 includes a rotating shaft 81 rotatably inserted into the upper horizontal frame 9a of the carriage frame 9 and an electric motor 84 drivingly rotating the rotating shaft 81 via pinions 82, 83. The electric motor 84 is controlled by a tilt angle controller 85. Although not illustrated, the tilting mechanism 27 is provided with a lock device for holding the tilt angle after setting.

Additionally, the tilting mechanism 27 is provided with an angle sensor 86 for detecting the tilt angle of the upper electrode wheel 1. Before the start of joining, the tilt angle controller 85 obtains angle information corresponding to the thicknesses of the metal plates 5, 6 from the upper controller 71 and sets the tilt angle. In addition, the tilt angle controller 85 controls the drive of the electric motor 84 by use of the signal of the angle sensor 86 to allow the tilt angle of the electrode wheel 1 to agree with the setting angle. In this case, a control model is previously constructed with respect to the relationship between the respective thicknesses of the metal plates 5, 6 and the corresponding electrode wheels 1, 2. The upper controller 71 assembles a database based on the control model and gives an angle to be set to the tilt angle controller 85 as needed. In this way, an optimum tilt angle can easily be set as needed in accordance with the respective thicknesses of the metal plates 5, 6. An allowable difference-thickness ratio of joint materials can be increased. In addition, the nugget N of the difference-thickness joint portion can surely be formed at the center of the joint interface. Therefore, a high-quality joint portion can be realized with an inexpensive device configuration. The angle sensor 86 may be a sensor that detects the rotational angle of the rotating shaft 81 as shown in the figure and may be an encoder detecting the rotational angle of the electric motor 84.

Alternatively, the respective thicknesses of the metal plates 5, 6 are measured by a detecting means such as e.g. the laser distance meter 75 mentioned earlier or the like before the welding by the electrode wheels 1, 2. An angle to be set is given to the tilt angle controller 85 on the basis of the setting information of the database from the measured thicknesses. Thus, the tilt angle is controlled on a real-time basis.

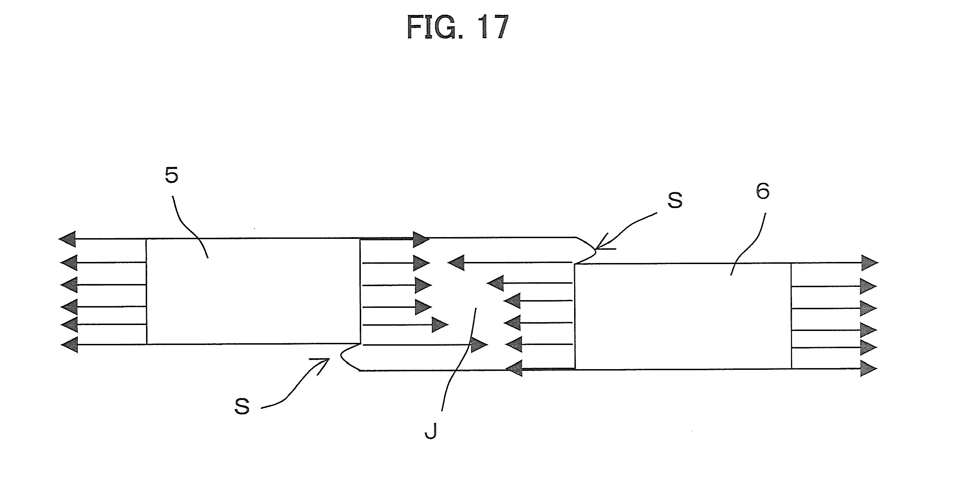

Fig. 17 illustrates stress concentration points in the state where steps exist at the joint portion.
In cold rolling for steel production and press forming including tailored blanks, high stress is applied to the joint portion in the work process after the joining. Specifically, if steps S exist at a joint portion J between the metal plates 5, 6 as illustrated in Fig. 17, such step portions correspond to stress concentration points. The metal plates 5, 6 are welded together with the axes 17, 18 of the electrode wheels 1, 2 tilted. Thereafter, the joint portion is rolled by the pressure rollers 3, 4 to significantly reduce the step gradient of the joint portion J. Thus, a stress concentration factor can be reduced to increase the durable strength of the joint portion. Consequently, the mash seam welding can be applied to working application in cold rolling for steel production and in press forming.

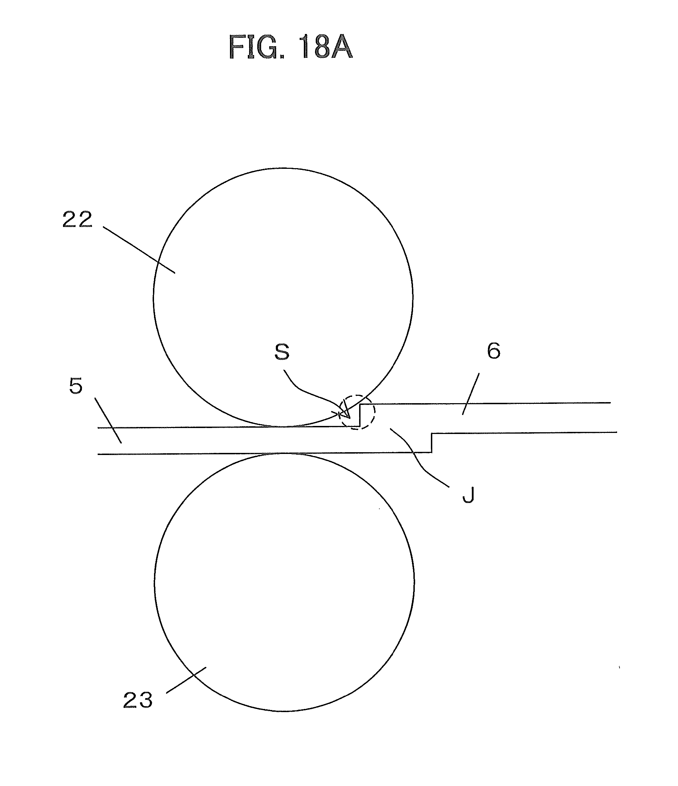

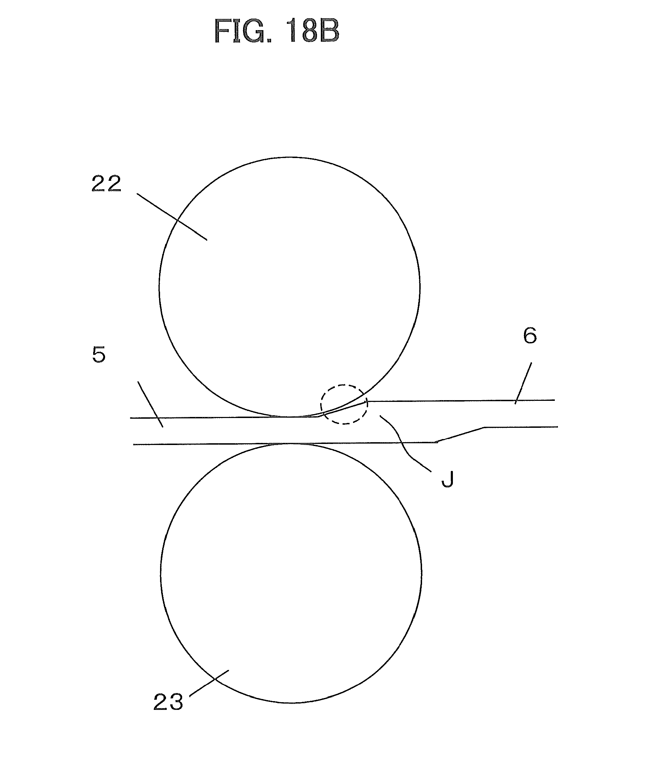

Fig. 18A illustrates a state of contact between a conventional mash seam welded portion and work rolls for a rolling mill. Fig. 18B illustrates a state of contact between the mash seam welded portion and the work rolls for the rolling mill in the following case. The metal plates 5, 6 are welded together with the axes of the electrode wheels tilted. Thereafter, the welded joint portion is rolled by the pressure rollers to significantly reduce the increased amount of thickness and step gradient of the joint portion.

In a skin pass rolling step for example, a joint portion joined in a joint step which is a step anterior to rolling has been rolled by a skin pass rolling mill in the past. In such a case, as illustrated in Fig. 18A, if the joint portion is passed between the work rolls as it is, a steep step S of the joint portion hits and scratches an upper work roll 22. In addition, the mark transfer of the joint portion occurs on the upper and lower work rolls 22, 23. To prevent such problems, the joint portion is passed between the upper and lower work rolls 22, 23 while a rolling load is made lower than that of the normal rolling portion or the upper and lower work rolls 22, 23 are opened. In this way, the scratch of the work roll 22 and the mark transfer of the joint portion on the work rolls 22, 23 are prevented. In contrast to this, in the present embodiment, the joint portion is welded with the axes 17, 18 of the electrode wheels 1, 2 tilted and thereafter, the joint portion is rolled by the pressure rollers 3, 4 to significantly reduce the step gradient of the joint portion as illustrated in Fig. 18B. Therefore, the contact angle (stress concentration factor) between the work rolls 22, 23 and the joint portion can be reduced. The contact surface pressure between the work rolls 22, 23 and the material can consequently be reduced. Thus, the scratching of the work rolls 22, 23 and the mark transfer of the joint portion on the work rolls 22, 23 can be prevented without reducing a line speed, which can improve productivity and yield.

The present embodiment described above produces the following effects.
1. The pair of electrode wheels 1, 2 is positively driven by the corresponding electric motors 61, 62 with the respective axes 17, 18 of the pair of upper and lower electrode wheels 1, 2 tilted to thereby join metal plates 5, 6. Therefore, the shearing force in the direction perpendicular to the welding line X is applied to the overlapping portions L of the two metal plates 5, 6. This applies the shear deformation in the same direction to the overlapping portions L. The plastic flow in the direction perpendicular to the welding line X occurs in addition to the plastic flow in the direction of the welding line resulting from the conventional rolling of the electrode wheels. The plastic flow in the direction perpendicular to the welding line X significantly reduces the increased amount of thickness of the overlapping portions (the joint portion) J after the joining. Consequently, the joint portion J is rolled by the pressure rollers 3, 4 immediately thereafter to further reduce the increased amount of thickness of the joint portion to a level corresponding to the base material thickness of the metal plates. Thus, the step gradient can be significantly reduced. Since the step gradient is reduced, the stress concentration factor can be reduced to ensure a high degree of joint strength.

If the two metal plates 5, 6 are different in thickness from each other, the tilt angles of the axes of the electrode wheels 1, 2 are adjusted according to the thicknesses of the metal plates 5, 6. This adjusts the reduced amount of thickness of each of the metal plates at the overlapping portions L. Therefore, the metal plates 5, 6 are joined to each other so that the nugget N may not deviate from the joint interface. Thus, the formation of the nugget N on the joint interface in addition to the reduction in stress concentration factor due to the reduction in step gradient can dramatically improve the joint strength of the joint portion. An allowable joint difference-thickness amount can be increased to improve the flexibility of the operation. Additionally, because of only the configuration in which the pair of electrode wheels 1, 2 are positively driven with the axes thereof tilted, the mash seam welding apparatus can be realized with the relatively simple and inexpensive configuration.

The joint portion J of the metal plates 5, 6 is rolled to a level corresponding to the base material thickness of the metal plates to significantly reduce the step gradient. This can reduce the stress concentration factor of the joint portion, which ensures a high degree of joint strength. Thus, the following effects can be provided. The mash seam welding can widely be applied to a cold rolling process and tailored blanks to which the mash seam welding have not heretofore been applied. The work roll on the steel plate work line can be prevented from being scratched. Productivity and yield can be improved.

That is, in the present embodiment, the step gradient of the joint portion subjected to the mash seam welding is reduced to reduce the stress concentration factor of the joint portion, which can ensure a high degree of joint strength. Therefore, in the cold rolling process for steel product line, it is possible to prevent the work roll from being scratched during the cold rolling as the next step and to improve anti-tension performance. Thus, the mash seam welding can be applied to the cold rolling process to which it has not heretofore been applied.

Also in tailored blanks, because of stress concentration on the step defined at the joint portion, the application of the mash seam welding to a portion requiring fatigue strength has been avoided. However, because of the reduced step gradient, the stress concentration is alleviated and press forming performance is improved. Therefore, an expensive laser beam welder can be replaced with the inexpensive mash seam welder.

In a continuous annealing line, and a production line including galvanizing line or the like, the contact angle (stress concentration factor) between the work rolls of a skin pass rolling mill and the joint portion can be reduced. Consequently, the contact surface pressure between the work roll and the material can be reduced. It is possible, therefore, to prevent the scratching of the work roll and the mark transfer of the joint portion without lowering a line speed. Thus, productivity and yield can be improved.

2. The two metal plates 5, 6 are joined to each other while the respective axes 17, 18 of the pair of electrode wheels 1, 2 are each tilted with respect to the straight line perpendicular to the welding line X so that the respective traveling-directional portions 1A, 2A of the pair of electrode wheels 1, 2 face in the horizontal plane toward the corresponding extending directions of the metal plates with which the electrode wheels 1, 2 first come into contact. Therefore, when the electrode wheels 1, 2 travel on the overlapping portions L along with the progress of the welding, it is possible to prevent the end portions 5A, 6A of the metal plates 5, 6 at the overlapping portion L from biting into the corresponding electrode wheels 1, 2 to scratch the electrode wheels 1, 2. As a result, it is possible to prevent the occurrence of spattering during the welding due to such scratches.

3. If the two metal plates 1, 2 are different in thickness from each other, the tilt angle of the axis of the electrode wheel on the side where one of the metal plates 1, 2 has a larger thickness is made greater than that on the side where the other of the metal plates 1, 2 has a smaller thickness. Therefore, the reduced amount of thickness of the metal plate having a larger thickness can be increased to substantially agree with that of the metal plate having a smaller thickness. Thus, the nugget N can be formed on the joint interface, which can increase joint strength and increase an allowable joint difference-thickness amount.

4. At least one of the processes before the start of welding of the overlapping portions L and after the completion of the welding of the overlapping portions L selects the first setting or the second setting. In the first setting the pair of electrode wheels 1, 2 is brought into contact with each other. In the second setting the pair of electrode wheels 1, 2 is not brought into contact with each other or the electrode wheels 1, 2 are brought into contact with each other at a light load compared with the pressing force during the welding. In the first setting the pair of electrode wheels 1, 2 is made non-driven but in the second setting it made driven. Therefore, it is possible to prevent the excessive thrust force from being applied to the upper and lower electrode wheels 1, 2. Thus, the operating lives of the upper and lower electrode wheel can be elongated. Further, the wear of the upper and lower electrode wheels 1, 2 can be suppressed to reduce running cost.

5. The pair of electrode wheels 1, 2 is installed in such a manner that their axes 17, 18 are tilted in the horizontal plane in the respective directions opposite to each other with respect to the axis Y perpendicular to the welding line X defined in the overlapping portions L of the two metal plates 5, 6. Therefore, the step gradient of the joint portion of the two metal plates can be reduced as described above so that the high degree of joint strength can be ensured. In addition, the nugget N formed by the mash seam welding is formed at the joint interface with a relatively simple and inexpensive configuration to improve the joint strength. Thus, manufacturing installations that increase the allowable joint difference-thickness amount can be provided.

6. The mechanism 27 is installed which independently tilts in the horizontal plane the respective axes 17, 18 of the pair of electrode wheels 1, 2 with respect to the axis Y perpendicular to the welding line X. Therefore, the optimum tilt angle can easily be set properly according to the thicknesses of the metal plates 1, 2. In addition, the mash seam welder can be provided which has the wide difference-thickness range of the thicknesses of the metal plates 1, 2.

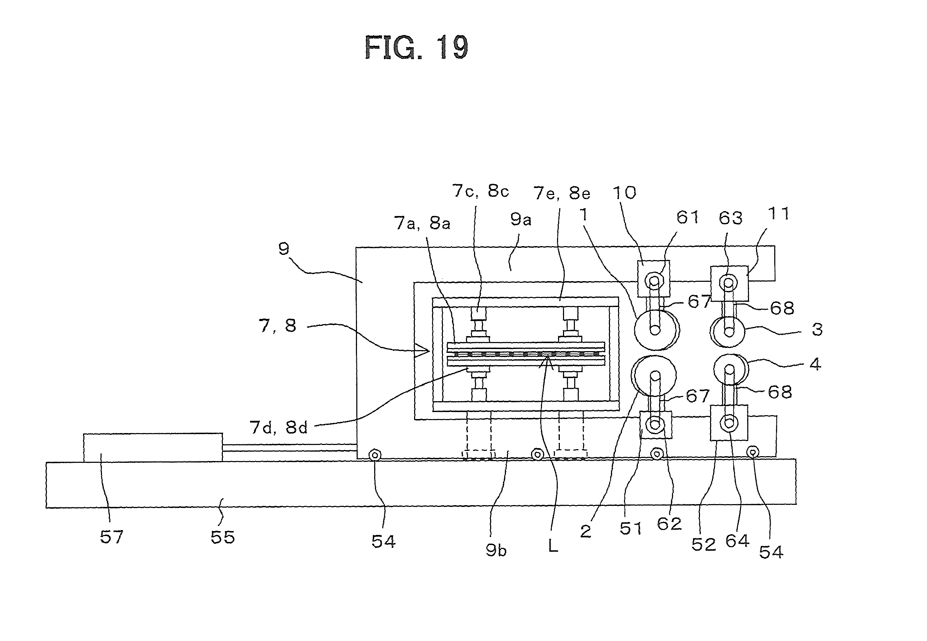

Another embodiment of the present invention will be described with reference to Figs. 19 to 22.
In the embodiment described above, as in the past the pair of upper and lower pressure rollers 3, 4 is pressure rollers that can be rotated around the respective axes parallel to each other. In addition, the joint portion after the mash seam welding is rolled by the pressure rollers 3, 4. Although the joint portion is even rolled as mentioned above, the following effects as described above can be produced by the mash seam welding being performed with the respective axes 17, 18 of the pair of upper and lower electrode wheels 1, 2 tilted. The reduced thickness effect of the welded portion (the joint portion) subjected to the mash seam welding is large. The step gradient of the joint portion J between the metal plates 5, 6 can significantly be reduced to reduce the stress concentration factor of the joint portion, thereby ensuring a high degree of joint strength. In the present embodiment, the joint portion is rolled by the pair of upper and lower pressure rollers with their axes tilted in addition to the pair of upper and lower electrode wheels. In this way, the joint portion is surely rolled to a level corresponding to the base material thickness of the metal plates, which makes it possible to smooth steps.

Fig. 19 is a schematic view of a mash seam welding apparatus according to the present embodiment.

Referring to Fig. 19, the mash seam welding apparatus of the present embodiment is provided with electric motors 63, 64 for drivingly rotating a pair of respective upper and lower pressure rollers. Similarly to the electric motors 61, 62 for drivingly rotating the pair of respective upper and lower electrode wheels, also the electric motors 63, 64 are mounted to the corresponding lateral surfaces of the pressure roller pressing device 11 and of the mounting block 52. In addition, the electric motors 63, 64 are connected to the corresponding rotating shafts of the pressure rollers 3, 4 via e.g. corresponding chain and sprocket mechanisms 68. The rotational power of the electric motors 63, 64 is transmitted to the corresponding pressure rollers 3, 4.

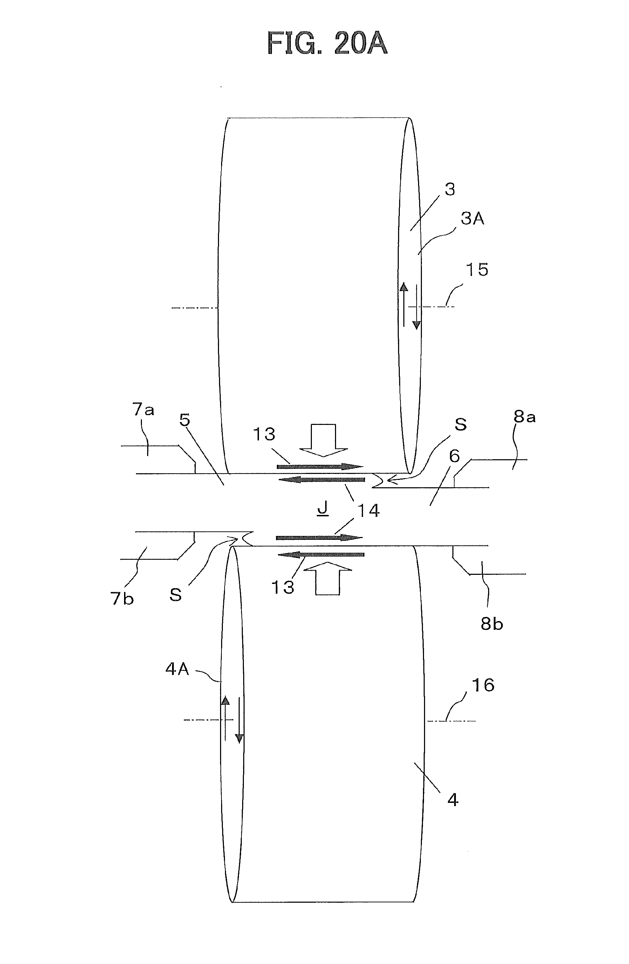

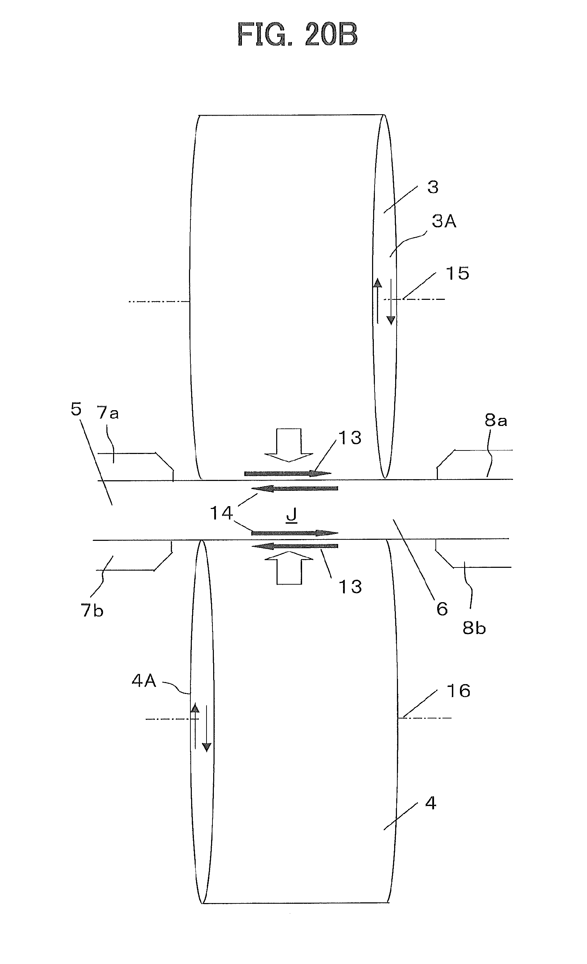

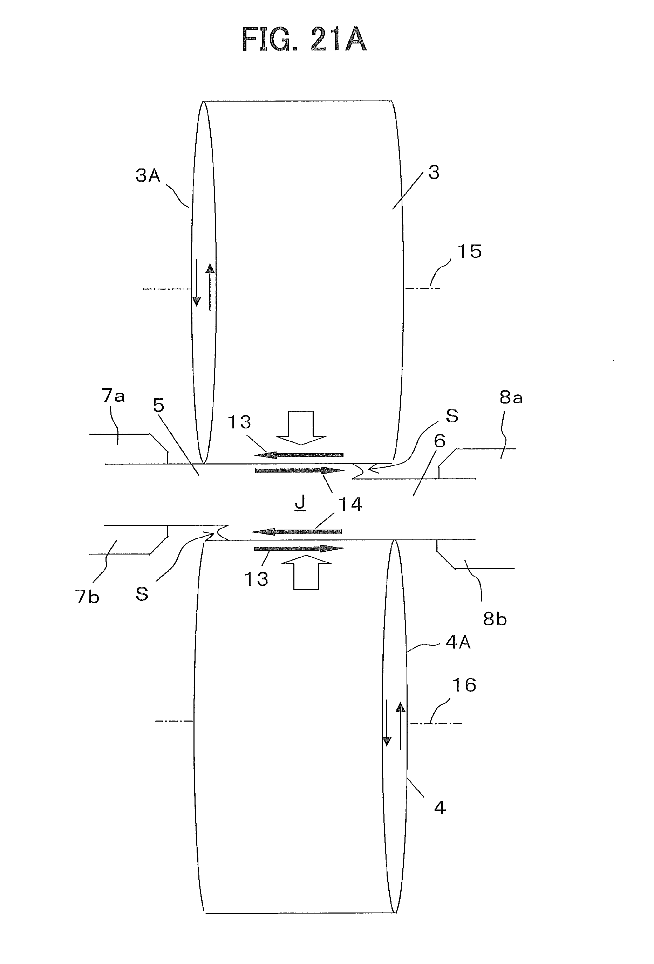

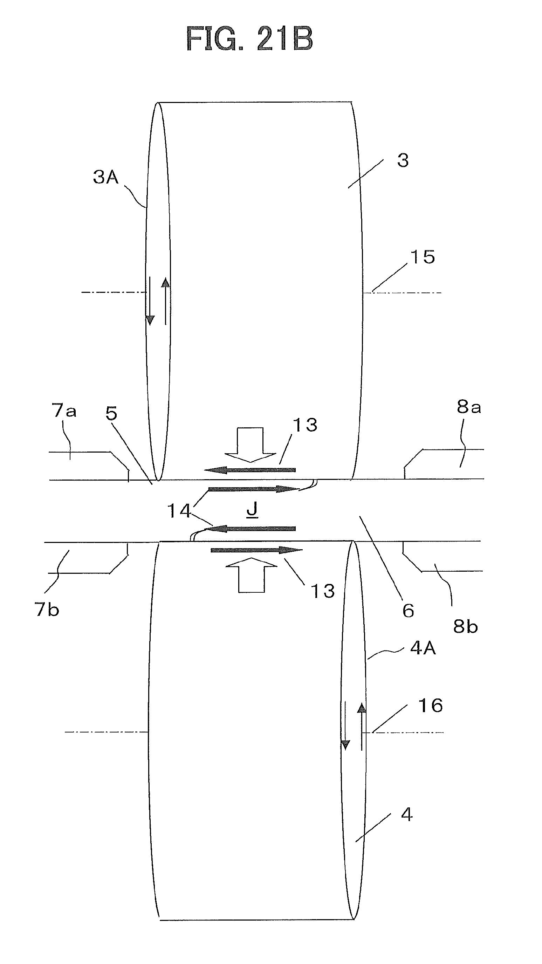

Figs. 20A, 20B, 21A and 21B each illustrate a state where the joint portion after the mash seam welding is rolled by the pair of upper and lower pressure rollers 3, 4.

In the present embodiment, the pair of upper and lower electrode wheels 1, 2 is installed as described in the above-embodiment in such a manner that their axes 17, 18 are tilted in the horizontal plane in the respective directions opposite to each other with respect to the straight line perpendicular to the welding line of the overlapping portions L of the two metal plates 5, 6. The mash seam welding is performed while positively driving the electrode wheels 1, 2 by the corresponding electric motors 61, 62. As illustrated in Figs. 20A and 20B or in Figs. 21A and 21B, also the pair of upper and lower pressure rollers 3, 4 is installed in such a manner that their axes 15, 16 are tilted in the horizontal plane in respective directions opposite to each other with respect to the straight line perpendicular to the welding line X of the joint portion J of the two metal plates 5, 6. The pressure rollers 3, 4 are positively driven by the corresponding electric motors 63, 64 to thereby roll the joint portion.

The respective axes 17, 18 of the pair of upper and lower electrode wheels, 1, 2 and the respective axes 15, 16 of the pair of upper and lower pressure rollers 3, 4 are tilted as described above. Because of this, both the mash seam welding by the electrode wheels 1, 2 and the rolling by the pressure rollers 3, 4 provide thickness-reducing action promoting the plastic flow in the direction perpendicular to the welding line. Thus, the steps S of the joint portion J can surely be rolled to a level corresponding to the base material thickness so as to be smoothed.

In the joining by conventional electrode wheels 1, 2 whose axes are not tilted, the plastic flow in the direction perpendicular to the welding line is limited by clamp devices. In this case, force transmitted from the joint portion to the grip portions of the clamp devices occurs. Therefore, if metal plates having small thicknesses are jointed to each other, there is a possibility that buckling occurs at the joint portion and at the metal material portion of the grip portion. In order to prevent the buckling, the clamp device needs only to be disposed extremely close to the joint portion. In such a case, a space between the clamp device and the joint portion is narrowed, which poses a problem as below. The arrangement of the electrode wheels, the pressure rollers, and their related installations is restricted. This impairs the flexibility of installation arrangement.

In the present embodiment, the respective axes 17, 18 of the electrode wheels 1, 2 are tilted in the directions opposite to each other in the horizontal plane. Therefore, during the joining by the electrode wheels 1, 2, the shearing force 14 applied to the joint portion J cancels the forces transmitted to the clamp devices 7, 8. Therefore, even if the clamp devices 7, 8 are not disposed immediately close to the joint portion J, it is possible to prevent the buckling of the metal plate during the joint of the metal plates having a smaller thickness. Consequently, a relatively wide space can be ensured between the clamp devices 7, 8 and the joint portion J. Thus, it is possible to alleviate the restriction on the arrangement of the electrode wheels 1, 2, the pressure rollers 3, 4 and their related installations (e.g. electric motors 61 to 64, chain and sprocket mechanisms 67, 68, tilting devices, etc.).

The details of the action in which the plastic flow in the direction perpendicular to the welding line is promoted by tilting the respective axes 15, 16 of the pair of upper and lower pressure rollers 3, 4 are the same as those in the case of the electrode wheels 1, 2 described with Fig. 5.

The respective directions of the tilt angles a of the pair of upper and lower pressure rollers 3, 4 can be set in two ways similarly to the case of the electrode wheels 1,2.

The first setting method is as below. As illustrated in Figs. 20A and 20B, the respective axes 15, 16 of the pair of pressure rollers 3, 4 are tilted with respect to the straight line Y perpendicular to the welding line X so that the respective travel-directional portions 3A, 4A of the pair of pressure rollers 3, 4 face in the horizontal plane toward the direction opposite to the extending direction of the metal plate 5 concerning the metal material with which the pressure rollers 3, 4 first come into contact. In other words, the respective axes 15, 16 of the pressure rollers 3, 4 are tilted so that the respective axial ends of the pressure rollers 3, 4 located, in the joint portion J of the metal plates 5, 6, on the side where a thickness is larger with the steps S of the joint portion J taken as starting points (the material portion, of the joint portion J, with which the pressure rollers 3, 4 first come into contact) face the rolling direction A of the joint portion J. In this case, the shearing force 14 corresponding to the above-mentioned velocity vector component R2 is applied from the steps S of the joint portion J of the metal plates 5, 6 in the extending direction of the metal plate 5 concerning the metal material with which the pressure rollers 3, 4 first come into contact. In this way, the step portions are rolled and smoothed while applying shear deformation in the same direction, i.e., in the direction perpendicular to the welding direction. Incidentally, at this time, a force in the direction opposite to the shearing force 14 is applied as the thrust force 13 from the joint portion J to the pressure rollers 3, 4. In other words, the reactive force of the thrust force 13 is applied as the shearing force 14 to the joint portion J.

The second setting method is such that the pressure rollers 3, 4 are tilted reversely to those of the first setting method as illustrated in Figs. 21A and 21B. Specifically, the respective axes 15, 16 of the pair of pressure rollers 3, 4 are tilted with respect to the straight line Y perpendicular to the welding line X so that the respective travel-directional portions 3A, 4A of the pair of pressure rollers 3, 4 face in the horizontal plane toward the extending direction of the metal plate 5 concerning the metal material with which the pressure rollers 3, 4 first come into contact. In other words, the respective axes 15, 16 of the pressure rollers 3, 4 are tilted so that the respective axial ends of the pressure rollers 3, 4 located, in the joint portion (mash seam welding portion) J of the metal plates 5, 6, on the side where a thickness is smaller with the steps S of the joint portion J taken as starting points (the material portion, of the joint portion J, with which the pressure rollers 3, 4 first does not come into contact) face the rolling direction A of the joint portion J. In this case, the shearing force 14 corresponding to the above-mentioned velocity vector component R2 is applied from the steps S of the joint portion J of the metal plates 5, 6 in the direction opposite to the extending direction of the metal plate 5 concerning the metal material with which the pressure rollers 3, 4 first come into contact. In this way, the step portions are rolled and smoothed while applying shear deformation in the same direction, i.e., in the direction perpendicular to the welding direction. Also at this time, a force in the direction opposite to the shearing force 14 is applied as the thrust force 13 from the joint portion J to the pressure rollers 3, 4.

The present embodiment employs the first setting method. The reason is as below.

Even if the pair of upper and lower pressure rollers 3, 4 is tilted by the second setting method, the steps S are subjected to plastic flow due to the shearing force 14 so that they can be smoothed. However, this case poses another problem as below. As illustrated in Fig. 21B, the steps S are interfolded into the base material and buried into the base material in a cracked manner. There is no problem if the smooth surface texture of the joint portion J is simply required and the second setting method is applied to a portion that does not need strength. However, if the second setting method is applied to a portion subject to stress or use application is plastic working such as press forming including tailored blanks, the end of the buried step becomes a singular stress field, which causes breakage. Therefore, as illustrated in Figs. 20A and 20B, the respective tilting directions of the pressure rollers 3, 4 are preferably directions where the respective axes 15, 16 of the pair of pressure rollers 3, 4 are tilted with respect to the straight line Y perpendicular to the welding line X so that the respective travel-directional portions 3A, 4A of the pair of pressure rollers 3, 4 face in the horizontal plane toward the direction opposite to the extending direction of the metal plate 5 concerning the metal material with which the pressure rollers 3, 4 first come into contact. In this case, as illustrated in Fig. 20B, the steps of the joint portion can be smoothed without allowing the steps S to be buried into the base material in a cracked manner, whereby the quality of the joint portion can be enhanced.

The tilt angle (corresponding to the tilt angle α in Fig. 5) of the axes 15, 16 of the pressure rollers 3, 4 is set according to the magnitude (the step amount) of the steps S of the joint portion. Qualitatively, the tilt angle is set to a small value if the step amount is small; the tilt angle is set to a larger value as the step amount becomes larger. That is, similarly to the case of the electrode wheel described with Fig. 5, the shear deformation due to the tilt of the axis 15 of the upper pressure roller 3 is predominated by the tilt angle in the contact arc length portion (corresponding to the contact arc length portion 46) between the upper pressure roller 3 and the material. Therefore, the tilt angle to be set is appropriately adjusted according to the amount of the step to be smoothed. If the metal plates 5, 6 made of materials different in thickness from each other are joined to each other, the step amounts of the mash seam welding portion J are different depending on the front and rear surfaces. However, if the tilt angle of the upper pressure wheel 3 is set according to the step amount as described above, the step can be smoothed. The same holds for the rolled state by the lower pressure roller 4 having the tilt angle. The tilt angle of the lower pressure roller 4 is set according to the lower step amount.

As described above, the axes 15, 16 of the pair of pressure rollers 3, 4 are each tilted with respect to the straight line Y perpendicular to the welding line X. The pair of pressure rollers 3, 4 are positively driven by the corresponding electric motors 63, 64 to thereby roll the steps S of the joint portion J. In this way, the shearing force in the direction perpendicular to the welding line is applied to the joint portion J to smooth the steps S. The shearing force depends on the deformation resistance of material. Therefore, the higher the deformation resistance is, the more the thrust force 13 applied to the pressure rollers 3, 4 from the metal plates 5, 6 is increased. If the thrust force 13 is increased as described above, the operating lives of the pressure rollers 3, 4 and of the bearings thereof are shortened and the holding force for the thrust force 13 is set, which poses a problem in that the entire apparatus is enlarged.

Fig. 22 illustrates the correlation between material temperatures and deformation resistance in the case where the metal plate is common steel. The deformation resistance of the metal plates 5, 6 depends on material temperature and has temperature characteristics shown in Fig. 22 if the metal plates 5, 6 are common steel.
In order to lower the thrust force 13, the temperature of the joint portion J is set preferably at 300°C or higher, further preferably at 500°C or higher. This can reduce the deformation resistance value of the metal plates 5, 6 to suppress the increase of the thrust force 13. Thus, the installation can be downsized.

In the present embodiment, the pair of upper and lower pressure rollers 3, 4 is disposed adjacently to the pair of upper and lower electrode wheels 1, 2 in the carriage frame 9. The joining and pressing are continuously performed by moving the carriage frame 9 in the welding direction. Although depending on the thickness of the metal plates 5, 6, the temperature in the vicinity of the joint portion rises up to approximately 1000°C to 1400°C immediately after the joint portion is passed between the electrode wheels. Thus, it is presumed that the temperature of the joint portion J rises up to a level higher than such temperatures. Since the joining and pressing are continuously performed, the temperature of the joint portion J during the pressing by the pressure rollers 3, 4 can easily be increased to approximately 300°C or higher or 500°C or higher by use of the residual heat of the joint portion J produced by the welding. Thus, the installation can be downsized.

The upper and lower pressure rollers 3, 4 having the respective tilted axes 15, 16 can be allowed to have the same setting as in the case of the electrode wheels described with Fig. 13 before the start of mash seam welding. Specifically, at least one, preferably, both processes before the start of the rolling of the joint portion J and after the completion of the rolling of the joint portion J select a first setting or a second setting. In the first setting, the upper and lower pressure rollers 3, 4 are brought into contact with each other. In the second setting, the upper and lower pressure rollers 3, 4 are not brought into contact with each other, or are brought into contact with each other at a light load compared with the pressing force during the rolling. In the former, i.e., in the first setting, the rotation of the upper and lower pressure rollers 3, 4 by the corresponding electric motors 63, 64 is made non-driven or is stopped. In the latter, i.e., in the second setting, the rotation of the upper and lower pressure rollers 3, 4 by the corresponding electric motors 63, 64 is made driven. In the first setting, after the upper and lower pressure rollers 3, 4 have reached the lateral end portions of the joint portion J, the actuation of the electric motors 63, 64 is immediately started to positively drivingly rotate the upper and lower pressure rollers 3, 4. In the second setting, after the upper and lower pressure rollers 3, 4 have reached the lateral end portion of the joint portion J, the driving of the pressure roller pressing device 11 is immediately switched to the setting for the pressing and rolling to apply the pressing force to the upper and lower pressure rollers 3, 4. In this way, the generation of the excessive thrust force can be prevented to elongate the operating life of the bearing and also to suppress the wear of the upper and lower pressure rollers 3, 4.

Also the present embodiment can employ the same control system as that of the previous embodiment described with Fig. 9. Specifically, the control system is provided which includes an upper controller, a carriage frame drive controller, a mash seam controller, a pressure roller controller, and a laser distance meter. Before and after the timing when the electrode wheels 1, 2 and the pressure rollers 3, 4 grip the ends of the overlapping portions of the metal plates 5, 6, the drive of the cylinder device 57 for driving the carriage frame 9, the electrode wheel pressing device 10, the electric motors 61, 62, the pressure roller pressing device 11, and the electric motors 63, 64 can be controlled so as to bring the following drive state. This drive state is different depending on the above-mentioned setting state (the first setting or the second setting) concerning the contact between the upper and lower electrode wheels 1, 2 and the above-mentioned setting state (the first setting or the second setting) concerning the contact between the upper and lower pressure rollers 3, 4.

The same tilting device as in the case of the electrode wheels described with Fig. 10 can be provided for the upper and lower pressure rollers 3, 4 whose axes 15, 16 are tilted. Thus, a joining machine can be provided which can appropriately set an optimum tilt angle with ease according to a step amount and has a wide difference-thickness range of joint materials.

Incidentally, in the embodiment described above, the electrode wheel pressing device 10 having the tilting mechanism 27 and the pressure roller pressing device 11 having the tilting mechanism 27 are disposed in one and the same carriage frame 9. However, even if they are disposed in corresponding separate frames, the function of the present invention will not be impaired.

The embodiment described above can produce the following effects in addition to the effects 1 to 6 in the previous embodiment.

1-A. The pair of pressure rollers 3, 4 is positively driven by the corresponding electric motors 63, 64 with the respective axes 15, 16 of the pair of upper and lower pressure rollers 3, 4 tilted to thereby roll the metal plates 5, 6, similarly to the case where the respective axes 17, 18 of the pair of upper and lower electrode wheels 1, 2 are tilted, the shearing force in the direction perpendicular to the welding line X is applied to the joint portion J. This applies the shear deformation to the joint portion J. The plastic flow in the direction perpendicular to the welding line X significantly reduces the increased amount of thickness of the joint portion. Consequently, during both the mash seam welding by the electrode wheels 1, 2 and the rolling by the pressure rollers 3, 4, the shear deformation in the direction perpendicular to the welding line X reduces the increased amount of thickness of the joint portion J. In the case where the metal plates having the same thickness are joined to each other, the joint portion J can surely be rolled to a level corresponding to the base material thickness of the metal plates and the steps can be smoothed. At the joint portion of the metal plates having different thicknesses, the steps can be smoothed or the step gradient can significantly be reduced. As a result, the stress concentration factor can be reduced more surely to ensure a high degree of joint strength compared with the case where only the respective axes of the electrode wheels 1, 2 are tilted.

The step gradient of the joint portion J of the metal plates 5, 6 is reduced or the steps S of the joint portion J are smoothed. This can reduce the stress concentration factor of the joint portion, which can ensure a high degree of joint strength. Thus, the following effects can be more ensured. The mash seam welding can widely be applied to a cold rolling process and tailored blanks to which the mash seam welding has not heretofore been applied. The work roll on the steel product line can be prevented from being scratched. Productivity and yield can be improved.

1-B. The respective axes 15, 16 of the pair of upper and lower pressure rollers 3, 4 are tilted in the directions opposite to each other in the horizontal plane. During the rolling by the pressure rollers 3, 4, the shearing force 14 is applied to the upper surface side and lower surface side of the joint portion J in opposite directions. The upper and lower forces transmitted to the clamp devices 7, 8 cancel each other. Thus, it is possible to prevent the buckling of the metal plate during the joint of the thin metal plates without disposing the clamp devices 7, 8 immediately close to the joint portion J. As a result, a relatively wide space can be ensured between the clamp devices 7, 8 and joint portion J, which can alleviate restriction on the arrangement of the electrode wheels 1, 2, the pressure rollers 3, 4 and their related installations (e.g., the electric motors 61 to 64, the chain and sprocket mechanisms 67, 68, the tiling mechanisms 27, etc.).

2. The respective axes 15, 16 of the pair of pressure rollers 3, 4 are each tilted with respect to the straight line Y perpendicular to the welding line X so that the respective traveling-directional portions 3A, 4A of the pair of pressure rollers 3, 4 face in the horizontal plane toward the corresponding directions opposite to the extending direction of the metal plate 5 concerning the metal material with which the pressure rollers 3, 4 first come into contact. In addition, the joint portion is rolled while applying the shearing force from the steps S of the joint portion J of the metal plates 5, 6 in the extending direction of the metal plate 5 concerning the metal material with which the pressure rollers 3, 4 first come into contact. Therefore, it is possible to prevent the step portion from being interfolded into the base material of the metal plates 5, 6. This can prevent crack-like defects (non-welded defects) from occurring when the step portion is interfolded into the base material.

3. The pair of pressure rollers 3, 4 is further provided which rolls the joint portion J of the two metal plates 5, 6 having been joined by the mash seam welding. In addition, the pressure rollers 3, 4 are installed in such a manner that their axes 15, 16 are tilted in the horizontal plane with respect to the straight line Y perpendicular to the welding line X. Therefore, the step gradient of the joint portion of the two metal plates 5, 6 can be reduced so that the high degree of joint strength can be ensured. In addition, the nugget N formed by the mash seam welding is formed at the joint interface with a relatively simple and inexpensive configuration to increase the joint strength. Thus, manufacturing installations that increase the allowable joint difference-thickness amount can be provided.

4. The mechanisms are provided which independently tilt in the horizontal plane the respective axes 15, 16 of the pair of pressure rollers 3, 4 with respect to the straight line Y perpendicular to the welding line X. Therefore, the joining apparatus can be provided which can easily set the optimum tilt angle properly according to the step amount and has the wide difference-thickness range of the thicknesses of the metal plates.

## Claims

1. A mash seam welding method in which two metal plates (5, 6) are placed to overlap each other at their end portions, and the overlapping portions (L) are pressed by a pair of upper and lower electrode wheels (1, 2) and continuously welded together by applying a welding current to the overlapping portions, followed by joining the metal plates,
wherein respective axes (17, 18) of the electrode wheels (1, 2) are tilted in a horizontal plane in respective directions opposite to each other with respect to a straight line (Y) perpendicular to a welding line (X) defined on the overlapping portions (L) of the two metal plates (5, 6), and then the electrode wheels (1, 2) are positively driven to thereby join the two metal plates.

2. The mash seam welding method according to claim 1,
wherein the respective axes (17, 18) of the electrode wheels are each tilted with respect to the straight line (Y) perpendicular to the welding line (X) so that respective travel-directional portions (1A, 2A) of the electrode wheels (1, 2) face in the horizontal plane toward an extending direction of the metal plate (5 or 6) with which the electrode wheels first come into contact, for joining the two metal plates.

3. The mash seam welding method according to claim 1 or 2,
wherein the two metal plates (5, 6) have different thicknesses, and a tilt angle of the axis (17 or 18) of the electrode wheel (1 or 2) on a side where a metal plate has a larger thickness is made greater than that of the axis of the electrode wheel on the side where a metal plate has a smaller thickness.

4. The mash seam welding method according to any one of claims 1 to 3,
wherein at least one of processes before the start of the welding of the overlapping portions (L) and after the completion of the welding of the overlapping portions (L) selects a first setting in which the pair of electrode wheels (1, 2) are brought into contact with each other or a second setting in which the pair of electrode wheels (1, 2) are not brought into contact with each other or are brought into contact with each other at a light load compared with the pressing force during the welding, and in the first setting the pair of electrode wheels is made non-driven and in the second setting the pair of electrode wheels is made driven.

5. The mash seam welding method according to any one of claims 1 to 4,
wherein after the two metal plates (5, 6) have been joined to each other by the mash seam welding, respective axes (15, 16) of a pair of pressure rollers (3, 4) are tilted in a horizontal plane with respect the straight line (Y) perpendicular to the welding line (X), and a step defined at the joined portion is rolled in a traveling direction (A) of the pressure rollers by positively driving the pressure rollers.

6. The mash seam welding method according to claim 5,
wherein the respective axes (15, 16) of the pressure rollers (3, 4) are each tilted with respect to the straight line (Y) perpendicular to the welding line (X) so that respective travel-directional portions (3A, 4A) of the pressure rollers (3, 4) face in a horizontal plane toward a direction opposite to an extending direction of the metal plate (5 or 6) concerning a metal material with which the pressure rollers (3, 4) first come into contact, and the step defined at the joint portion is rolled in the traveling direction (A).

7. A mash seam welding apparatus in which two metal plates (5, 6) are placed to overlap each other at their end portions, and the overlapping portions (L) are pressed by a pair of upper and lower electrode wheels (1, 2) and continuously welded together by applying a welding current to the overlapping portions, followed by joining the metal plates,
wherein the electrode wheels (1, 2) are installed in such a manner that axes (17, 18) of the electrode wheels are tilted in a horizontal plane in respective directions opposite to each other with respect to an axis (Y) perpendicular to a welding line (X) defined on the overlapping portions (L) of the two metal plates (5, 6).

8. The mash seam welding apparatus according to claim 7, comprising:
a mechanism (27) for independently tilting in a horizontal plane each of the respective axes (17, 18) of the electrode wheels (1, 2) with respect to the axis (Y) perpendicular to the welding line (X).

9. The mash seam welding apparatus according to claim 7 or 8, further comprising:
a pair of upper and lower pressure rollers (3, 4) for rolling a joint portion (J) of the metal plates (5, 6) joined by the mash seam welding;
wherein the pressure rollers (3, 4) are installed in such a manner that axes (15, 16) of the pressure rollers are tilted in a horizontal plane with respect to the straight line (Y) perpendicular to the welding line (X) of the joint portion (J).

10. The mash seam welding apparatus according to claim 9, further comprising:
a mechanism (27) for independently tilting in a horizontal plane the respective axes (15, 16) of the pressure rollers (3, 4) with respect to the straight line (Y) perpendicular to the welding line (X).
